# EUROPEAN PATENT SPECIFICATION

(11) **EP 4 071 858 B1**
(45) Date of publication and mention of the grant of the patent: **26.11.2025**
(21) Application number: 21912320.5
(22) Date of filing: 05.02.2021
(51) Int. Cl.: H01M 4/133, H01M 4/1393, H01M 4/36, H01M 4/04, H01M 4/587, H01M 10/0525, H01M 4/38

(54) **NEGATIVE ELECTRODE ACTIVE MATERIAL, PREPARATION METHOD THEREFOR, SECONDARY BATTERY AND APPARATUS**
AKTIVES MATERIAL FÜR NEGATIVE ELEKTRODEN, ZUBEREITUNGSVERFAHREN DAFÜR, SEKUNDÄRBATTERIE UND GERÄT
MATÉRIAU ACTIF D'ÉLECTRODE NÉGATIVE, SON PROCÉDÉ DE PRÉPARATION, BATTERIE SECONDAIRE ET APPAREIL

(43) Date of publication of application: 12.10.2022
(73) Proprietor: Contemporary Amperex Technology (Hong Kong) Limited, Central, Central And Western District (HK)
(72) Inventor: WANG, Jiazheng, Ningde Fujian 352100 (CN); LIU, Na, Ningde Fujian 352100 (CN); LIANG, Chengdu, Ningde Fujian 352100 (CN)
(74) Representative: Jacob, Reuben Ellis
(86) International application number: PCT/CN2021/075662
(87) International publication number: WO 2022/165776

(56) References cited:
- CN-A- 1 707 830
- CN-A- 1 909 268
- CN-A- 112 310 362
- US-A1- 2020 095 129
- US-B1- 6 395 427
- US-B1- 6 869 546

## Description

### TECHNICAL FIELD

This application relates to the electrochemical field, and in particular, to an improved negative-electrode active material, a preparation method thereof, and a secondary battery and an apparatus associated therewith.

### BACKGROUND

With the development of the related fields in recent years, secondary batteries (also known as rechargeable batteries) are increasingly used in high-tech, high-intensity and high-requirement fields such as consumer goods, new energy vehicles, large-scale energy storage, aerospace, ships and heavy machinery, even serving as the main power and energy supply equipment in these fields. With the advance in science and technology, secondary batteries are receiving increasingly stricter requirements from these fields, such as requirements for shorter charging time and longer battery life. US6,395,427 relates to a negative active material for rechargeable lithium battery and a method of preparing the same. US6,869,546 relates to carbon materials, electrodes and non aqueous electrolyte secondary cells.

### SUMMARY

To resolve the foregoing problems, this application provides a negative-electrode active material, according to claim 1, a preparation method thereof, and a secondary battery and an apparatus associated therewith, so that the secondary battery can have both good fast charging performance and good cycling performance.

To achieve the above objective, a first aspect of this application provides a negative-electrode active material, including a carbon matrix, boron and iron, where the iron is distributed in the interior of the carbon matrix.

The negative-electrode active material in this application adopts a special structure, so that a secondary battery including the negative-electrode active material can have both good fast charging performance and good cycling performance.

In any one of the embodiments of this application, the boron is distributed in a surface layer of the carbon matrix.

In any one of the embodiments of this application, the iron is in a zero-valence atomic state.

In any one of the embodiments of this application, the boron is selected from at least one of the following states: a boron carbide state, a zero-valence atomic state and a solid solution of boron in carbon.

In any one of the embodiments of this application, given that the carbon matrix is 100 parts by weight, the iron is 0.1-5 parts by weight, and optionally, the iron is 0.50-3.00 parts by weight.

In any one of the embodiments of this application, given that the carbon matrix is 100 parts by weight, the boron is 0.01-3.00 parts by weight, and optionally, the boron is 0.10-0.40 parts by weight.

In any one of the embodiments of this application, given that the carbon matrix is 100 parts by weight, the iron and the boron together are 0.10-5.00 parts by weight, and optionally, the iron and the boron together are 0.50-3.00 parts by weight.

In any one of the embodiments of this application, amount of the iron is greater than or equal to that of the boron.

In any one of the embodiments of this application, a weight ratio of the boron to the iron is 1:2-1:25, and optionally, the weight ratio of the boron to the iron is 1:10-1:20.

In any one of the embodiments of this application, an X-ray photoelectron spectroscopy (XPS) analysis of the negative-electrode active material shows a characteristic peak only under a binding energy in a range of 183.0eV-188.0eV.

In any one of the embodiments of this application, at a discharge rate of 0.33C, a delithiation platform voltage of the negative-electrode active material is 0.18V-0.22V, and optionally, 0.19V-0.20V.

In any one of the embodiments of this application, the carbon matrix is artificial graphite.

A second aspect of this application provides a preparation method of a negative-electrode active material, which is used for preparing the negative-electrode active material in the first aspect of this application, where the method includes at least the following: (a) providing a carbon-containing raw material; (b) adding an iron source to the carbon-containing raw material to obtain a mixture 1; (c) performing heat treatment on the mixture 1 to obtain a carbon-containing intermediate material; (d) adding a boron source to the carbon-containing intermediate material to obtain a mixture 2; and (e) performing graphitization treatment on the mixture 2 to obtain the negative-electrode active material; where the negative-electrode active material includes a carbon matrix, boron and iron, where the iron is distributed in the interior of the carbon matrix.

In any one of the embodiments of this application, a coking value of the carbon-containing raw material is 40%-65%, and optionally, 45%-60%.

In any one of the embodiments of this application, a volatile proportion of the carbon-containing raw material is 30%-55%, and optionally, 35%-50%.

In any one of the embodiments of this application, a median particle size Dᵥ50 of the iron source is less than or equal to 3µm, and optionally, 1µm-2µm.

In any one of the embodiments of this application, a mass percentage of element iron in the iron source in the carbon-containing raw material is 0.05%-4%, and optionally, 0.2%-2%.

In any one of the embodiments of this application, in step (c), the heat treatment includes a first heating step and a second heating step, where the first heating step is performed for at least 2 hours at a temperature of 140°C-260°C, and the second heating step is performed for at least 2 hours at a temperature of 500°C-650°C.

In any one of the embodiments of this application, a heat treatment temperature for the first heating step is 150°C-230°C.

In any one of the embodiments of this application, a heat treatment temperature for the second heating step is 520°C-600°C.

In any one of the embodiments of this application, a heat treatment time of the first heating step is 2-4 hours.

In any one of the embodiments of this application, a heat treatment time of the second heating step is 3-6 hours.

In any one of the embodiments of this application, a mass percentage of element boron in the boron source in the carbon-containing intermediate material is 0.1%-8%, and optionally, 1%-4%.

In any one of the embodiments of this application, in step (e), a temperature of the graphitization treatment is 2200°C-2600°C, and optionally, 2400°C-2600°C.

In any one of the embodiments of this application, the carbon-containing raw material is selected from at least one of coal pitch, petroleum pitch, natural pitch, shale tar pitch, petroleum, heavy oil and decanted oil.

In any one of the embodiments of this application, the iron source is selected from at least one of soluble iron (II) salt, soluble iron (III) salt, ferric oxide, ferroferric oxide, ferrous oxide and ferrous powder.

In any one of the embodiments of this application, the boron source is selected from at least one of elemental boron, boric acid, metaboric acid, pyroboric acid and boron trioxide.

A third aspect of this application provides a secondary battery including a negative-electrode plate, where the negative-electrode plate includes the negative-electrode active material according to any one of the foregoing embodiments or a negative-electrode active material prepared by the preparation method according to any one of the foregoing embodiments.

A fourth aspect of this application provides a battery module including the secondary battery according to the third aspect of this application.

A fifth aspect of this application provides a battery pack including the battery module according to the fourth aspect of this application.

A sixth aspect of this application provides an apparatus including at least one of the secondary battery according to the third aspect of this application, the battery module according to the fourth aspect of this application, or the battery pack according to the fifth aspect of this application.

The battery module, the battery pack, and the apparatus in this application include the secondary battery provided in this application, and therefore have at least the same advantages as the secondary battery.

### BRIEF DESCRIPTION OF DRAWINGS

FIG. 1A is a scanning electron microscope (SEM) image of a negative-electrode active material according to an embodiment of this application; and FIG. 1B and FIG. 1C are energy dispersive spectrum analysis (EDS) images of the negative-electrode active material in a visible region of FIG. 1A.
FIG. 2 is an X-ray diffraction (XRD) pattern of a negative-electrode active material according to an embodiment of this application.

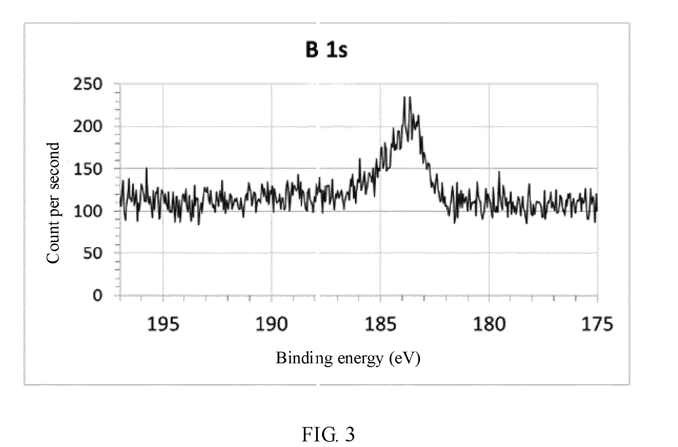

FIG. 3 is an X-ray photoelectron spectroscopy (XPS) analysis pattern of artificial graphite prepared in Example 1 of this application.
FIG. 4 is an X-ray photoelectron spectroscopy (XPS) analysis pattern of artificial graphite prepared in Comparative Example 1 of this application.
FIG. 5 is a schematic diagram of a secondary battery according to an embodiment of this application.
FIG. 6 is an exploded view of the secondary battery in FIG. 5.
FIG. 7 is a schematic diagram of a battery module according to an embodiment of this application.
FIG. 8 is a schematic diagram of a battery pack according to an embodiment of this application.
FIG. 9 is an exploded view of the battery pack in FIG. 8.
FIG. 10 is a schematic diagram of an embodiment of an apparatus using the secondary battery in this application as a power source.

The following specific embodiments describe design details of the negative-electrode active material and the preparation method thereof, as well as the secondary battery, battery module, battery pack and apparatus that include such negative-electrode active material in this application.

### DESCRIPTION OF EMBODIMENTS

"Ranges" disclosed herein are defined in the form of lower and upper limits. Given ranges are defined by selecting lower and upper limits, and the selected lower and upper limits define boundaries of special ranges. Ranges defined in the method may or may not include end values, and any combinations may be used, meaning any lower limit may be combined with any upper limit to form a range. For example, if ranges of 60-120 and 80-110 are provided for a specific parameter, it is understood that ranges of 60-110 and 80-120 can also be envisioned. In addition, if low limit values of a range are given as 1 and 2, and upper limit values of the range are given as 3, 4, and 5, the following ranges can all be envisioned: 1-3, 1-4, 1-5, 2-3, 2-4, and 2-5. In this application, unless otherwise stated, a value range of "a-b" is a short representation of any combination of real numbers between a and b, where both a and b are real numbers. For example, a value range of "0-5" means that all real numbers in the range of "0-5" are listed herein, and "0-5" is just a short representation of a combination of these values. In addition, when a parameter is expressed as an integer greater than or equal to 2, this is equivalent to disclosure that the parameter is, for example, an integer among 2, 3, 4, 5, 6, 7, 8, 9, 10, 11, 12, and so on.

In this application, unless otherwise specified, all the embodiments and optional embodiments mentioned herein can be combined with each other to form new technical solutions.

In this application, unless otherwise specified, all the technical features and optional features mentioned herein can be combined with each other to form new technical solutions.

In this application, unless otherwise specified, all the steps mentioned herein can be performed sequentially or randomly, and are preferably performed sequentially. For example, a method including steps (a) and (b) indicates that the method may include steps (a) and (b) performed in sequence, or may include steps (b) and (a) performed in sequence. For example, that the method may further include step (c) indicates that step (c) may be added to the method in any order. For example, the method may include steps (a), (b), and (c), or steps (a), (c), and (b), or steps (c), (a), and (b), or the like.

In this application, unless otherwise specified, "include" and "contain" mentioned herein may refer to open or closed inclusion. For example, terms "include" and "contain" can mean that other unlisted components may also be included or contained, or only listed components may be included or contained.

In the descriptions of this specification, it should be noted that "more than" or "less than" is inclusive of the present number and that "more" in "one or more" means two or more than two, unless otherwise specified.

In the descriptions of this specification, unless otherwise stated, the term "or" is inclusive. For example, the phrase "A or B" means "A, B, or both A and B". More specifically, any one of the following conditions satisfies the condition "A or B": A is true (or present) and B is false (or not present); A is false (or not present) and B is true (or present); or both A and B are true (or present).

### Negative-electrode active material

A first aspect of this application provides a negative-electrode active material which includes a carbon matrix, boron and iron, where the iron is distributed in the interior of the carbon matrix.

The applicants have found that the technical effects of this application can be attained if the negative-electrode active material includes a carbon matrix, boron and iron, with the iron distributed in the interior of the carbon matrix. The applicants speculate that this is possibly because diffuse distribution of iron in the interior of the carbon matrix can change the grain orientation of the carbon matrix, which enhances the isotropy of the negative-electrode material, thus improving the fast charging performance of the material; in addition, the negative-electrode active material also includes boron, which passivates surface defects of the material, thus improving the cycling performance of the battery.

Iron may be uniformly distributed or non-uniformly distributed in the interior of the carbon matrix.

In some embodiments, the iron is in a zero-valence atomic state.

In some embodiments, the boron is distributed in a surface layer of the carbon matrix. Boron is an electron-deficient element which can easily combine with defective carbon atoms on the surface of the carbon matrix to passivate the surface defects of the material, thus improving the cycling performance of the battery.

It should be noted that the "surface layer of the carbon matrix" refers to a region extending from the outer surface of a carbon matrix particle to the interior of the particle by a "specified depth", and that the "specified depth" is 1% of a longest distance between any two points in a planar projection of the carbon matrix particle. The "interior of the carbon matrix" refers to other regions of the carbon matrix particle than the "surface layer of the carbon matrix".

In some embodiments, the boron is in at least one of the following states: a boron carbide state, a zero-valence atomic state and a solid solution of boron in carbon.

The state of existence and distribution of iron and/or boron in the negative-electrode active material may be determined by using scanning electron microscope (SEM) and energy dispersive spectrum (EDS) images, X-ray diffraction (XRD), and X-ray photoelectron spectroscopy (XPS).

According to some embodiments, a scanning electron microscope (SEM) image of the negative-electrode active material may be obtained by using instruments and methods well-known in the art. An exemplary testing method is as follows:
spreading and adhering the negative-electrode active material, onto a conductive adhesive to prepare a test sample with length × width = 6 cm × 1.1 cm, cutting the powder material with a blade and polishing it with an ion polisher, and testing cross-sections of particles by using a scanning electronic microscope (for example, ZEISS Sigma 300). Specifically, refer to JY/T010-1996.

According to some embodiments, energy dispersive spectrum (EDS) analysis of the negative-electrode active material may be performed by using instruments and methods well-known in the art. Specifically, refer to GB/T 17359-2012.

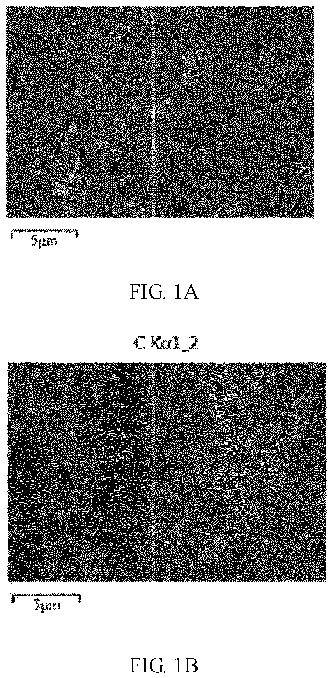

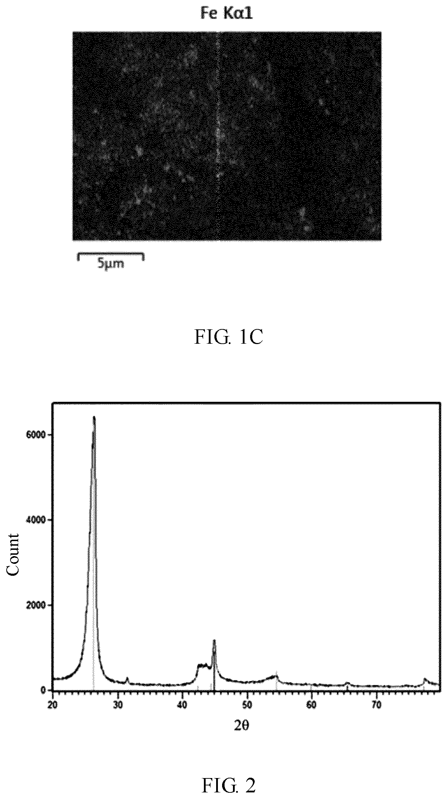

FIG. 1A is a scanning electron microscope (SEM) image of a negative-electrode active material according to an embodiment of this application, showing a cross-sectional view of the negative-electrode active material which is cut. FIG. 1B and FIG. 1C are energy dispersive spectrum analysis (EDS) images of the negative-electrode active material in a visible region of FIG. 1A. FIG. 1B is an energy dispersive spectrum image of carbon distribution. FIG. 1C is an energy dispersive spectrum image of iron distribution. It can be seen from FIG. 1C that iron is distributed in an uneven and diffuse state inside the cut carbon matrix particles.

According to some embodiments, the X-ray diffraction of the negative-electrode active material may be tested by using instruments and methods well-known in the art. For example, an X-ray powder diffractometer may be used to test the X-ray diffraction according to JIS K0131-1996 General Rules for X-ray Diffraction Analysis. For example, a Bruker D8 Discover X-ray diffractometer is used with a CuKα ray as a radiation source, with a ray wavelength of λ=1.5406Å, a scanning angle 2θ ranging from 15° to 80°, and a scanning rate of 4°/min.

FIG. 2 is an X-ray diffraction pattern of a negative-electrode active material according to an embodiment of this application. It can be seen from FIG. 2 that, the negative-electrode active material contains iron, and the iron is in a zero-valence state.

According to some embodiments, distribution of boron can be tested by using instruments and methods well-known in the art. For example, an X-ray photoelectron spectroscopy (XPS) may be used for testing. Specifically, refer to GB/T 19500-2004. In an example, an ion polisher may be used to polish the surface of the negative-electrode active material, and an element test is performed each time the negative-electrode active material is reduced by 5nm in thickness, so as to determine the distribution of boron.

Given that the carbon matrix in the negative-electrode active material is 100 parts by weight, the iron is 0.10-5.00 parts by weight. Given that the carbon matrix in the negative-electrode active material is 100 parts by weight, the amount of iron is within a numerical range with any two of the following values as end values measured in "parts by weight": 0.10, 0.15, 0.20, 0.25, 0.30, 0.35, 0.40, 0.45, 0.50, 0.55, 0.60, 0.65, 0.70, 0.75, 0.80, 0.85, 0.90, 0.95, 1.00, 1.10, 1.20, 1.30, 1.40, 1.50, 1.60, 1.70, 1.80, 1.90, 2.00, 2.10, 2.20, 2.30, 2.40, 2.50, 2.60, 2.70, 2.80, 2.90, 3.00, 3.10, 3.20, 3.30, 3.40, 3.50, 3.60, 3.70, 3.80, 3.90, 4.00, 4.10, 4.20, 4.30, 4.40, 4.50, 4.60, 4.70, 4.80, 4.90 and 5.00. For example, given that the carbon matrix in the negative-electrode active material is 100 parts by weight, the iron may be 0.10-4.00 parts by weight, 0.50-3.00 parts by weight, 0.50-2.50 parts by weight, 1.00-3.50 parts by weight or 1.50-2.50 parts by weight. It should be noted that, although the applicants have listed the above values in parallel, it does not mean that the negative-electrode active material can always attain equivalent or similar performance with the amount of iron within a numerical range defined by using any two of the foregoing values as end values, and a preferred iron amount of this application can be selected based on the following specific discussion and specific experimental data.

Given that the carbon matrix in the negative-electrode active material is 100 parts by weight, the boron is 0.01-3.00 parts by weight. Given that the carbon matrix in the negative-electrode active material is 100 parts by weight, the amount of boron is within a numerical range with any two of the following values as end values measured in "parts by weight": 0.01, 0.05, 0.10, 0.15, 0.20, 0.25, 0.30, 0.35, 0.40, 0.45, 0.50, 0.55, 0.60, 0.65, 0.70, 0.75, 0.80, 0.85, 0.90, 0.95, 1.00, 1.10, 1.20, 1.30, 1.40, 1.50, 1.60, 1.70, 1.80, 1.90, 2.00, 2.10, 2.20, 2.30, 2.40, 2.50, 2.60, 2.70, 2.80, 2.90 and 3.00. For example, given that the carbon matrix in the negative-electrode active material is 100 parts by weight, the boron may be 0.05-3.00 parts by weight, 0.10-2.50 parts by weight, 0.20-2.00 parts by weight, 0.20-1.50 parts by weight, 0.05-1.00 parts by weight, 0.10-1.00 parts by weight, 0.10-0.85 parts by weight, 0.10-0.50 parts by weight, 0.20-0.80 parts by weight, 0.10-0.40 parts by weight, 0.15-0.50 parts by weight, 0.50-2.00 parts by weight, or 1.00-3.00 parts by weight. It should be noted that, although the applicants have listed the above values in parallel, it does not mean that the negative-electrode active material can always attain equivalent or similar performance with the amount of boron within a range defined by using any two of the foregoing values as end values, and a preferred boron amount of this application can be selected based on the following specific discussion and specific experimental data.

Given that the carbon matrix in the negative-electrode active material is 100 parts by weight, the iron and the boron together are 0.10-5.00 parts by weight. Given that the carbon matrix in the negative-electrode active material is 100 parts by weight, the total amount of the iron and the boron is within a numerical range with any two of the following values as end values measured in "parts by weight": 0.10, 0.50, 0.80, 0.85, 0.90, 0.95, 1.00, 1.10, 1.20, 1.30, 1.40, 1.50, 1.60, 1.70, 1.80, 1.90, 2.00, 2.10, 2.20, 2.30, 2.40, 2.50, 2.60, 2.70, 2.80, 2.90, 3.00, 3.10, 3.20, 3.30, 3.40, 3.50, 3.60, 3.70, 3.80, 3.90, 4.00, 4.10, 4.20, 4.30, 4.40, 4.50, 4.60, 4.70, 4.80, 4.90 and 5.00. For example, given that the carbon matrix in the negative-electrode active material is 100 parts by weight, the iron and the boron together may be 0.50-5.00 parts by weight, 0.20-4.00 parts by weight, 0.50-3.00 parts by weight, 1.00-3.50 parts by weight or 1.50-3.00 parts by weight. It should be noted that, although the applicants have listed the above values in parallel, it does not mean that the negative-electrode active material can always attain equivalent or similar performance with the total amount of iron and boron within a range defined by using any two of the foregoing values as end values, and a preferred total amount of iron and boron of this application can be selected based on the following specific discussion and specific experimental data.

In some embodiments, amount of the iron is greater than or equal to that of the boron.

In some embodiments, a weight ratio of the boron to the iron is 1:2-1:25. The weight ratio of the boron to the iron may be within a numerical range with any two of the following values as end values: 1:25, 1:24, 1:23, 1:22, 1:20, 1:18, 1:16, 1:15, 1:12, 1:10, 1:8, 1:7, 1:6, 1:5, 1:4, 1:3 and 1:2. For example, the weight ratio of the boron to the iron may be 1:2-1:23, 1:4-1:22, 1:5-1:21, 1:6-1:20, 1:7-1:18, 1:9-1:16, 1:10-1:20 or 1:11-1:15. It should be noted that, although the applicants have listed the above ratios in parallel, it does not mean that the negative-electrode active material can always attain equivalent or similar performance with the weight ratio of boron to iron within a range defined by using any two of the foregoing ratios as end points, and a preferred weight ratio of boron to iron of this application can be selected based on the following specific discussion and specific experimental data.

According to some embodiments, amounts of the elements in the negative-electrode active material can be determined by using an inductively coupled plasma emission spectrometer (ICP). For example, this may be done in the following steps: 1. take the negative-electrode active material (for example, 0.5g) and concentrated nitric acid (for example, GR grade, 10ml) and dissolve the material into the acid in a microwave digestion instrument (for example, CEM-Mars6) which operates at a frequency of, for example, 2450Hz; after filtration, taken a given volume of filtrate (for example, 50 ml) to obtain a liquid sample; place the liquid sample in an atomization chamber of an ICP device (for example, Thermo7400), where under the action of a carrier gas, an aerosol is formed which is then ionized and excited to emit a characteristic spectrum; and determine element types based on a wavelength of the characteristic spectrum and element amounts based on intensity of the characteristic spectrum.

In some embodiments, an X-ray photoelectron spectroscopy (XPS) analysis of the negative-electrode active material shows a characteristic peak only under a binding energy in a range of 183.0eV-188.0eV.

In some embodiments, at a discharge rate of 0.33C, a delithiation platform voltage of the negative-electrode active material is 0.18V-0.22V, and optionally, 0.19V-0.20V. The delithiation platform voltage of the negative-electrode active material being within the given range helps to further improve the fast charging performance of the negative-electrode active material.

It should be noted that the delithiation platform voltage of the negative-electrode active material refers to an average voltage of a battery during its delithiation process at a specified discharge rate (for example, 0.33C). Specifically, the delithiation platform voltage is equal to energy released during delithiation of a battery at a specified discharge rate divided by capacity released during delithiation of the battery.

In some embodiments, the carbon matrix is artificial graphite. Where the carbon matrix in the negative-electrode active material is artificial graphite, the terms "negative-electrode active material" and "artificial graphite composite material" may be used interchangeably.

A second aspect of this application provides a preparation method of a negative-electrode active material, which is used to prepare the negative-electrode active material in the first aspect of this application. The method includes at least the following:
(a) providing a carbon-containing raw material;
(b) adding an iron source to the carbon-containing raw material to obtain a mixture 1;
(c) performing heat treatment on the mixture 1 to obtain a carbon-containing intermediate material;
(d) adding a boron source to the carbon-containing intermediate material to obtain a mixture 2; and
(e) performing graphitization treatment on the mixture 2 to obtain the negative-electrode active material;
where the negative-electrode active material includes a carbon matrix, boron, and iron distributed in the interior of the carbon matrix.

In some embodiments, the carbon-containing raw material may be selected from at least one of the following: coal pitch, petroleum pitch, natural pitch, shale tar pitch, petroleum, heavy oil and decanted oil.

In some embodiments, a coking value of the carbon-containing raw material is 40%-65%. The coking value of the carbon-containing raw material being within the given range further helps iron enter the interior of the carbon matrix.

In some embodiments, the coking value of the carbon-containing raw material may be within a numerical range with any two of the following values as end values: 40%, 41%, 42%, 43%, 44%, 45%, 46%, 47%, 48%, 49%, 50%, 51%, 52%, 53%, 54%, 55%, 56%, 57%, 58%, 59%, 60%, 61%, 62%, 63%, 64%, and 65%. For example, the coking value of the carbon-containing raw material may be 40%-55%, 42%-52%, or 45%-60%. It should be noted that, although the applicants have listed the above values in parallel, it does not mean that the carbon-containing raw material can always attain equivalent or similar performance with the coking value within a range defined by using any two of the foregoing values as end values, and a preferred coking value of the carbon-containing raw material of this application can be selected based on the following specific discussion and specific experimental data.

The coking value of the carbon-containing raw material measures the mass percent coke which remains in a given amount of carbon-containing raw material sample after the sample is heat-treated under specified conditions to become coked. For a testing method of the coking value of the carbon-containing raw material, refer to GB/T 8727-2008.

In some embodiments, a volatile proportion of the carbon-containing raw material is 30%-55%. The volatile proportion of the carbon-containing raw material being within the given range further helps iron enter the interior of the carbon matrix.

In some embodiments, the volatile proportion of the carbon-containing raw material may be within a numerical range with any two of the following values as end values: 30%, 31%, 32%, 33%, 34%, 35%, 36%, 37%, 38%, 39%, 40%, 41%, 42%, 43%, 44%, 45%, 46%, 47%, 48%, 49%, 50%, 51%, 52%, 53%, 54%, and 55%. For example, the volatile proportion of the carbon-containing raw material may be 32%-52%, 35%-50%, 37%-45% or 43%-55%. It should be noted that, although the applicants have listed the above values in parallel, it does not mean that the carbon-containing raw material can always attain equivalent or similar performance with the volatile proportion within a range defined by using any two of the foregoing values as end values, and a preferred volatile proportion of the carbon-containing raw material of this application can be selected based on the following specific discussion and specific experimental data.

The volatile proportion of the carbon-containing raw material measures the mass percent matter which is gone (volatilized) from a carbon-containing material sample after the sample is heat-treated under specified conditions. For a testing method of the volatile proportion of the carbon-containing raw material, refer to GB/T 2001-2013.

In some embodiments, the iron source may be selected from at least one of the following: soluble iron (II) salt, soluble iron (III) salt, ferric oxide, ferroferric oxide, ferrous oxide and ferrous powder.

In some embodiments, the iron source may be added in a form of a solution, a suspension liquid, a slurry or a solid phase, and optionally, the iron source may be added in a form of solid powder.

In some embodiments, a median particle size Dᵥ50 of the iron source is less than or equal to 3µm. For example, the median particle size Dᵥ50 of the iron source may be 0.1µm-3µm, 0.5µm-1.5µm, 0.7µm-1.3µm or 1µm-2µm. Controlling the median particle size Dᵥ50 of the iron source to be within the given range further helps iron to be distributed in the interior of the carbon matrix.

The median particle size Dᵥ50 of the iron source is a particle size at which a cumulative volume distribution percentage of the negative-electrode active material reaches 50%.

In some embodiments, in the foregoing step (b), a mass percentage of element iron in the iron source in the carbon-containing raw material is 0.05%-4%, and optionally, 0.2%-1%. Controlling the amount of iron added to be within the given range helps to keep a delithiation platform voltage of the negative-electrode active material within the foregoing range, which further improves fast charging performance of the negative-electrode active material.

In some embodiments, in the foregoing step (c), the heat treatment includes a first heating step and a second heating step. The first heating step is performed for at least 2 hours at a temperature of 140°C-260°C. The second heating step is performed for at least 2 hours at a temperature of 500°C-650°C.

In some embodiments, a heating temperature for the first heating step may be within a numerical range with any two of the following values as end values: 140°C, 145°C, 150°C, 155°C, 160°C, 165°C, 170°C, 175°C, 180°C, 185°C, 190°C, 195°C, 200°C, 205°C, 210°C, 215°C, 220°C, 225°C, 230°C, 235°C, 240°C, 245°C, 250°C, 255°C and 260°C. For example, the heating temperature for the first heating step may be 150°C-230°C or 155°C-230°C; for example, 145°C-220°C, 160°C-250°C, 140°C-200°C or 150°C-190°C. It should be noted that, although the applicants have listed the above values in parallel, it does not mean that equivalent or similar performance can always be attained with the heating temperature for the first heating step within a range defined by using any two of the foregoing values as end values, and a preferred heating temperature for the first heating step of this application can be selected based on the following specific discussion and specific experimental data.

In some embodiments, a heating time of the first heating step may be 2-4 hours; for example, 2.5-4 hours, 2-3 hours, 2-2.5 hours or 3-4 hours.

In some embodiments, a heating temperature for the second heating step may be within a numerical range with any two of the following values as end values: 500°C, 505°C, 510°C, 515°C, 520°C, 525°C, 530°C, 535°C, 540°C, 545°C, 550°C, 555°C, 560°C, 565°C, 570°C, 575°C, 580°C, 585°C, 590°C, 595°C, 600°C, 605°C, 610°C, 615°C, 620°C, 625°C, 630°C, 635°C, 640°C, 645°C and 650°C. For example, the heating temperature for the first heating step may be 150°C-230°C or 500°C-630°C; for example, 520°C-600°C, 550°C-650°C, 540°C-620°C or 580°C-650°C. It should be noted that, although the applicants have listed the above values in parallel, it does not mean that equivalent or similar performance can always be attained with the heating temperature for the second heating step within a range defined by using any two of the foregoing values as end values, and a preferred heating temperature for the first second step of this application can be selected based on the following specific discussion and specific experimental data.

In some embodiments, a heating time of the second heating step may be 2-6 hours; for example, 3-6 hours, 3-5 hours, or 4-6 hours.

In some embodiments, the first heating step may be performed in an air atmosphere.

In some embodiments, the second heating step may be performed in an inert gas atmosphere. For example, the second heating step may be performed in a nitrogen or argon atmosphere.

In some embodiments, a same heating device may be used for both the first heating step and the second heating step. For example, the first heating step and the second heating step may both be performed in a delayed coking tower. Specifically, the raw material may be added into a heating tank of the delayed coking tower and subjected to the first heating step there, and after severe heating till the temperature for the second heating step is reached, the raw material is quickly moved to a coke chamber of the delayed coking tower and kept there for enough time so that cracking reaction takes place in depth to complete coking.

In some embodiments, different heating devices may be used for the first heating step and the second heating step. For example, the first heating step may be performed in a roller furnace while the second heating step may be performed in a delayed coking tower. Specifically, the mixture 1 may be subjected to the first heating step in the roller furnace, and then transferred to a coking device for the second heating step after being cooled.

In the foregoing step (c), the heat treatment includes two heating steps with the temperature and time of the first heating step set in the given ranges, which can fully soften the carbon-containing raw material, thus helping iron enter the interior of the carbon matrix. If only one heating step is performed, the carbon-containing raw material is possibly rapidly coked and solidified so that the iron source can hardly be distributed to the interior of the carbon matrix.

In some embodiments, the boron source may be selected from at least one of the following: boric acid, metaboric acid, pyroboric acid or boron trioxide.

In some embodiments, the boron source may be added in a form of a solid phase; for example, the iron source may be added in a form of solid powder.

In some embodiments, in the foregoing step (d), a mass percentage of element boron in the boron source in the carbon-containing intermediate material is 0.1%-8%, and optionally, 1%-4%. The applicants have found that, the boron source will be volatilized to some extent during subsequent graphitization treatment, and controlling the percentage of boron source added to be within the given range helps to keep the boron content in the finally prepared negative-electrode active material within the foregoing given range, thus further improving cycling performance of the battery.

In the preparation method of a negative-electrode active material in this application, the iron source and the boron source are added step by step, so that iron and boron are distributed in the carbon matrix as specified herein. Iron is able to change the orientation of graphite grains only when distributed in the interior of the carbon matrix, thus enhancing isotropy of the material and improving the fast charging performance of the material. Therefore, the first step is to add the iron source and adjust a heating process to make iron enter the interior of the carbon matrix. Boron is an electron-deficient element which is able to combine with defective carbon atoms only in the surface part of a graphite material to passivate surface defects of the material, thus improving cycling performance of the battery. Therefore, in order to distribute iron to the interior of the carbon matrix and boron in a surface layer of the carbon matrix, the iron source and the boron source are added in a stepwise manner.

In some embodiments, after the foregoing step (d), the mixture 2 may be crushed. The crushing treatment may be performed by an appropriate technology where a mortar can be used for manual crushing in small-scale experiments while an industrial crusher, for example, an impact crusher, a cone crusher, a baffle crusher, a hammer crusher, a mobile crusher, a single-stage crusher, a roll crusher, a compound crusher or a high-efficiency crusher, can be used in mass production. The median particle size Dᵥ50 of the crushed mixture 2 may be 5-25 µm, for example, 6-16 µm.

In some embodiments, in the foregoing step (e), a temperature for the graphitization treatment is 2200°C-2600°C. In one aspect, controlling the temperature to be in the given range helps reduce volatilization of boron during heating, thus further improving the cycle performance of the material. In addition, controlling the temperature for the graphitization treatment to be in the given range helps to keep the delithiation platform voltage of the material in the foregoing range, thus further improving the fast charging performance of the material.

In some embodiments, the temperature for the graphitization treatment may be within a numerical range with any two of the following values as end values: 2200°C, 2230°C, 2250°C, 2280°C, 2300°C, 2320°C, 2350°C, 2380°C, 2400°C, 2410°C, 2430°C, 2450°C, 2480°C, 2500°C, 2520°C, 2550°C and 2600°C. For example, the temperature for the graphitization treatment may be 2250°C-2550°C, 2300°C-2500°C, 2350°C-2450°C, 2200°C-2350°C, 2400°C-2600°C or 2410°C-2550°C. It should be noted that, although the applicants have listed the above values in parallel, it does not mean that equivalent or similar performance can always be attained with the temperature for the graphitization treatment within a range defined by using any two of the foregoing values as end values, and a preferred temperature for the graphitization treatment of this application can be selected based on the following specific discussion and specific experimental data.

In some embodiments, in the foregoing step (e), a time for the graphitization treatment may be 2-24 hours, for example, 2-23 hours, 3-23.5 hours, 4-22 hours, 3-12 hours, 4-10 hours, 5-8 hours, 5-7 hours or 5-6 hours.

The graphitization treatment may be performed by using a suitable graphitization furnace, for example, an Acheson graphitization furnace or a lengthwise graphitization furnace.

In some embodiments, the method may further optionally include a step (g): coating a surface of the negative-electrode active material with asphalt.

Performance improvements brought by the negative-electrode active material of this application are characterized hereinafter mainly based on secondary batteries, and in particular, based on lithium-ion secondary batteries. However, it should be noted here that, the negative-electrode active material of this application may be used in any electrical apparatuses that include a carbon-based electrode material and benefit such electrical apparatuses.

### Secondary battery

Some embodiments of this application provide a secondary battery, where the secondary battery may be a lithium-ion secondary battery, a potassium-ion secondary battery, a sodium-ion secondary battery or a lithium-sulfur battery, and in particular is preferably a lithium-ion secondary battery. Generally, the secondary battery includes a positive-electrode plate, a negative-electrode plate, a separator, and an electrolyte. In a battery charging/discharging process, active ions are intercalated and deintercalated back and forth between the positive-electrode plate and the negative-electrode plate. The electrolyte conducts ions between the positive-electrode plate and the negative-electrode plate.

### Negative-electrode plate

The secondary battery of this application includes a negative-electrode plate, where the negative-electrode plate includes a negative-electrode current collector and a negative-electrode film layer provided on at least one surface of the negative-electrode current collector, where the negative-electrode film layer includes the foregoing negative-electrode active material of this application.

In some embodiments, in addition to the foregoing negative-electrode active material of this application, the negative-electrode film layer may further include a specific quantity of other commonly used negative-electrode active materials, for example, one or more of natural graphite, other artificial graphite, soft carbon, hard carbon, silicon-based materials, tin-based materials, and lithium titanate. The silicon-based material may be selected from one or more of elemental silicon, silicon oxide, and a silicon-carbon composite. The tin-based material may be selected from one or more of elemental tin, tin-oxygen compounds, and tin alloys.

In the secondary battery, the negative-electrode film layer includes the negative-electrode active material, an optional binder, an optional conductive agent, and other optional additives, and is usually formed by a negative-electrode slurry applied as a coating and dried. The negative-electrode slurry is usually obtained by dispersing the negative-electrode active material and the optional conductive agent, binder, and others in a solvent and stirring them to a uniform mixture. The solvent may be N-methylpyrrolidone (NMP) or deionized water.

As an example, the conductive agent is one or more of superconducting carbon, carbon black (for example, acetylene black or Ketjen black), carbon dots, carbon nanotube, graphene, and carbon nanofiber.

In an example, the binder may include one or more of styrene-butadiene rubber (SBR), water soluble unsaturated resin SR-1B, polyacrylic acid (PAA), polyacrylic acid sodium (PAAS), polyacrylamide (PAM), polyvinyl alcohol (PVA), sodium alginate (SA), and carboxymethyl chitosan (CMCS). In an example, the binder may include one or more of styrene-butadiene rubber (SBR), polyvinyl alcohol (PVA), sodium alginate (SA), polymethacrylic acid (PMAA), and carboxymethyl chitosan (CMCS). Other optional additives are, for example, thickeners (for example, sodium carboxymethyl cellulose CMC-Na), PTC thermistor materials, and the like.

In addition, in the secondary battery, the negative-electrode plate does not exclude additional functional layers other than the negative-electrode film layer. For example, in some embodiments, the negative-electrode plate may further include a conductive primer layer (which is, for example, formed by a conductive agent and a binder) disposed between the negative-electrode current collector and a first negative-electrode film layer. In some other embodiments, the negative-electrode plate may further include a protective layer covering a surface of the negative-electrode film layer.

In the secondary battery, the negative-electrode current collector may be a metal foil or a composite current collector; for example, the metal foil may be a copper foil, a silver foil, an iron foil, or a foil made of alloys of the foregoing metals. The composite current collector may include a polymer matrix and a metal layer formed on at least one surface of the polymer matrix, and may be formed by forming a metal material (such as aluminum, aluminum alloy, nickel, nickel alloy, titanium, titanium alloy, silver, and silver alloy) on the polymer matrix (for example, a matrix of polypropylene PP, polyethylene glycol terephthalate PET, polybutylene terephthalate PBT, polystyrene PS, polyethylene PE, or copolymers thereof).

### Positive-electrode plate

In the secondary battery, the positive-electrode plate includes a positive-electrode current collector and a positive-electrode film layer that is provided on at least one surface of the positive-electrode current collector and that includes a positive-electrode active material. For example, the positive-electrode current collector has two surfaces back to back in its thickness direction, and the positive-electrode film layer is provided on either or both of the two back-to-back surfaces of the positive-electrode current collector.

In the secondary battery, the positive-electrode current collector may be a metal foil or a composite current collector; for example, the metal foil may be an aluminum foil, and the composite current collector may include a polymer matrix and a metal layer formed on at least one surface of the polymer matrix. The composite current collector may be formed by forming a metal material (such as aluminum, aluminum alloy, nickel, nickel alloy, titanium, titanium alloy, silver, and silver alloy) on the polymer matrix (for example, a matrix of polypropylene PP, polyethylene glycol terephthalate PET, polybutylene terephthalate PBT, polystyrene PS, polyethylene PE, or copolymers thereof).

In the secondary battery, the positive-electrode active material may be a positive-electrode active material for secondary batteries well known in the art. For example, the positive-electrode active material may include one or more of the following: olivine-structured lithium-containing phosphate, lithium transition metal oxide, and respective modified compounds thereof. However, this application is not limited to such materials, and may alternatively use other conventional well-known materials that can be used as positive-electrode active materials for secondary batteries. One of these positive-electrode active materials may be used alone, or two or more of them may be used in combination. Examples of the lithium transition metal oxide may include, but are not limited to, one or more of lithium cobalt oxide (for example, LiCoO₂), lithium nickel oxide (for example, LiNiO₂), lithium manganese oxide (for example, LiMnO₂ and LiMn₂O₄), lithium nickel cobalt oxide, lithium manganese cobalt oxide, lithium nickel manganese oxide, lithium nickel cobalt manganese oxide (for example, LiNi_{1/3}Co_{1/3}Mn_{1/3}O₂(NCM333), LiNi_{0.5}Co_{0.2}Mn_{0.3}O₂(NCM523), LiNi_{0.5}CO_{0.25}Mn_{0.25}O₂(NCM211), LiNi_{0.6}CO_{0.2}Mn_{0.2}O₂(NCM622) and LiNi_{0.8}Co_{0.1}Mn_{0.1}O₂(NCM811)), lithium nickel cobalt aluminum oxide (for example, LiNi_{0.85}Co_{0.15}Al_{0.05}O₂), and modified compounds thereof. Examples of the olivine-structured lithium-containing phosphate may include, but are not limited to, one or more of lithium iron phosphate (for example, LiFePO₄(LFP)), composite material of lithium iron phosphate and carbon, lithium manganese phosphate (for example, LiMnPO₄), composite material of lithium manganese phosphate and carbon, lithium manganese iron phosphate, and composite material of lithium manganese iron phosphate and carbon.

In some embodiments, the positive-electrode film layer may further optionally include a binder. Non-limiting examples of the binder used for the positive-electrode film layer may contain one or more of the following: polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorine-containing acrylic resin.

In some embodiments, the positive-electrode film layer may further optionally include a conductive agent. The conductive agent for the positive-electrode film layer may include one or more of superconducting carbon, acetylene black, carbon black, Ketjen black, carbon dots, carbon nanotubes, graphene, and carbon nanofibers.

In some embodiments, the positive-electrode plate may be prepared by using the following method: the foregoing components used for preparing a positive-electrode plate, for example, the positive-electrode active material, conductive agent, binder, and any other components, are dispersed in a solvent (for example, N-methylpyrrolidone) to form a uniform positive-electrode slurry; the positive-electrode slurry is applied on the positive-electrode current collector, and then processes such as drying and cold pressing are performed to obtain the positive-electrode plate.

### Electrolyte

The electrolyte conducts ions between the positive-electrode plate and the negative-electrode plate. The electrolyte may be selected from at least one of a solid electrolyte and a liquid electrolyte (or electrolyte solution).

In some embodiments, the electrolyte is an electrolyte solution. The electrolyte includes an electrolytic salt and a solvent. In some embodiments, the electrolytic salt may be one or more of lithium hexafluorophosphate (LiPF₆), lithium tetrafluoroborate (LiBF₄), lithium perchlorate (LiClO₄), lithium hexafluoroarsenate (LiAsF₆), lithium bis(fluorosulfonyl)imide (LiFSI), lithium bistrifluoromethanesulfonimide (LiTFSI), lithium trifluoromethanesulfonate (LiTFS), lithium difluoro(oxalato)borate (LiDFOB), lithium dioxalate borate (LiBOB), lithium difluorophosphate (LiPO₂F₂), lithium difluoro(dioxalato)phosphate (LiDFOP), and lithium tetrafluoro oxalato phosphate (LiTFOP).

In some embodiments, the solvent may be selected from one or more of the following: ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), fluoroethylene carbonate (FEC), methylmethyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), tetramethylene sulfone (SF), methyl sulfone (MSM), ethyl methyl sulfone (EMS), and diethyl sulfone (ESE).

In some embodiments, the electrolyte may further optionally include an additive. For example, the additive may include one or more of the following: a negative-electrode film forming additive, a positive-electrode film forming additive, or may include an additive capable of improving some performance of batteries, for example, an additive for improving over-charge performance of batteries, an additive for improving high-temperature performance of batteries, and an additive for improving low-temperature performance of batteries.

### Separator

Generally, the secondary battery further includes a separator, and, in the secondary battery, the separator separates the positive-electrode plate from the negative-electrode plate, and provides selective transmission or barrier for substances of different types, sizes and charges in the system. For example, the separator is an electronic insulator, which physically separates the positive-electrode active material from the negative-electrode active material of the secondary battery, preventing internal short circuit and forming an electric field in a given direction, and which allows ions in the battery to move between the positive and negative electrodes through the separator.

In some embodiments, a material used for preparing the separator may include one or more of glass fiber, non-woven fabric, polyethylene, polypropylene, and polyvinylidene fluoride. The separator may be a single-layer thin film or a multi-layer composite thin film. When the separator is a multi-layer composite film, the multiple layers may be made of the same or different materials.

In some embodiments, the above positive-electrode plate, negative-electrode plate, and separator may be made into an electrode assembly through winding or lamination.

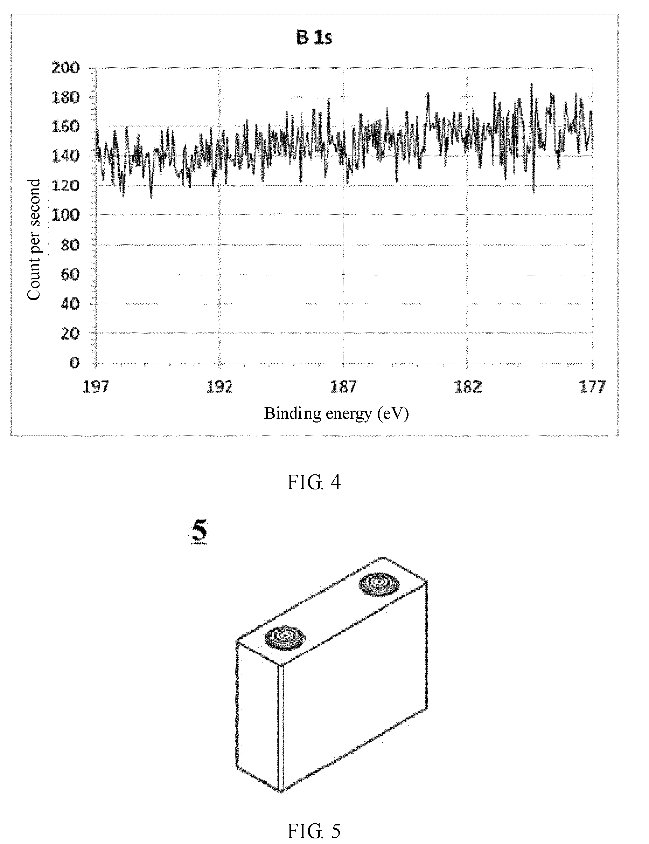

The secondary battery is not particularly limited in shape in the embodiments of this application, and may be cylindrical, rectangular, or of any other shapes. FIG. 5 shows a secondary battery 5 with a rectangular structure as an example.

In some embodiments, the secondary battery may include an outer package. The outer package is configured to encapsulate the electrode assembly and the electrolyte.

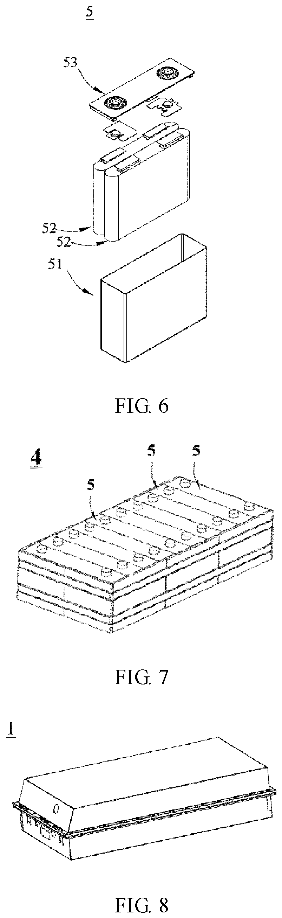

In some embodiments, referring to FIG. 6, the outer package may include a housing 51 and a cover plate 53. The housing 51 may include a base plate and a side plate connected onto the base plate, and the base plate and the side plate enclose an accommodating cavity. The housing 51 has an opening communicating with the accommodating cavity, and the cover plate 53 can cover the opening to close the accommodating cavity.

A positive-electrode plate, a negative-electrode plate, and a separator may be made into an electrode assembly 52 through winding or lamination. The electrode assembly 52 is encapsulated into the accommodating cavity. The electrolyte may be a liquid electrolyte, and the liquid electrode infiltrates into the electrode assembly 52. There may be one or more electrode assemblies 52 in the secondary battery 5, and the quantity may be adjusted as required.

In some embodiments, the outer package of the secondary battery may be a hard shell, for example, a hard plastic shell, an aluminum shell, or a steel shell. The outer package of the secondary battery may alternatively be a soft pack, for example, a soft pouch. A material of the soft pack may be plastic, for example, may include one or more of polypropylene (PP), polybutylene terephthalate (PBT), polybutylene succinate (PBS), and the like.

In some embodiments, secondary batteries may be assembled into a battery module, and a battery module may include a plurality of secondary batteries, the specific quantity of which may be adjusted based on use and capacity of the battery module.

FIG. 7 shows a battery module 4 as an example. Referring to FIG. 7, in the battery module 4, a plurality of secondary batteries 5 may be sequentially arranged in a length direction of the battery module 4. Certainly, the secondary batteries may alternatively be arranged in any other manner. Further, the plurality of secondary batteries 5 may be fastened through fasteners.

Optionally, the battery module 4 may further include a housing with an accommodating space, and the plurality of secondary batteries 5 are accommodated in the accommodating space.

In some embodiments, the battery modules may be further assembled into a battery pack, and a quantity of battery modules included in the battery pack may be adjusted based on use and capacity of the battery pack.

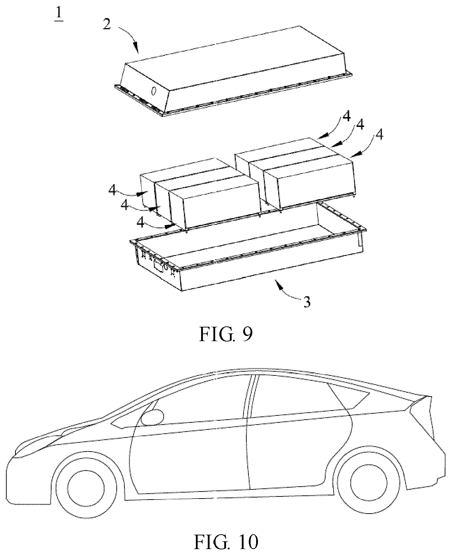

FIG. 8 and FIG. 9 show a battery pack 1 as an example. Referring to FIG. 8 and FIG. 9, the battery pack 1 may include a battery box and a plurality of battery modules 4 arranged in the battery box. The battery box includes an upper box body 2 and a lower box body 3. The upper box body 2 can cover the lower box body 3 to form an enclosed space for accommodating the battery modules 4. The plurality of battery modules 4 may be arranged in the battery box in any manner.

### Apparatus

This application further provides an apparatus, where the apparatus includes at least one of the secondary battery, the battery module, or the battery pack. The secondary battery, the battery module, or the battery pack may be used as a power source of the apparatus, or may be used as an energy storage unit of the apparatus. The apparatus may be, but is not limited to, a mobile device (for example, a mobile phone or a laptop computer), an electric vehicle (for example, a battery electric vehicle, a hybrid electric vehicle, a plug-in hybrid electric vehicle, an electric bicycle, an electric scooter, an electric golf vehicle, or an electric truck), an electric train, a ship, a satellite, an energy storage system, and the like.

The secondary battery, the battery module, or the battery pack may be selected for the apparatus based on requirements for using the apparatus.

FIG. 10 shows an apparatus as an example. The apparatus is a battery electric vehicle, a hybrid electric vehicle, a plug-in hybrid electric vehicle, or the like. To meet requirements of the apparatus for high power and high energy density of the secondary battery, a battery pack or a battery module may be used.

In another example, the apparatus may be a mobile phone, a tablet computer, a notebook computer, or the like. Such apparatus is usually required to be light and thin and may use a secondary battery as a power source.

How the negative-electrode active material prepared according to the embodiments of this application influences performance of electrochemical apparatuses is characterized hereinafter based on specific examples. However, it should be noted in particular that the scope of protection of this application is defined by the claims without being limited to the above embodiments.

### Examples

Unless otherwise stated, raw materials used in this application are analytically pure, and water used in this application is deionized water.

### I. Preparation of negative-electrode active material

### Preparation of material 1:

(a) A given mass (for example, 100g) of coal pitch was weighed as a carbon-containing raw material, which had a coking value of 52% and a volatile proportion of 45%.
(b) A given mass of ferrous powder was weighed and mixed with the coal pitch to obtain a mixture 1, where a mass percentage of element iron in the ferrous powder to the coal pitch was 0.2%, and a median particle size Dᵥ50 of the ferrous powder was 1 µm.
(c) The mixture 1 was placed in a roller furnace and subjected to a first heating step there, heated to 180°C at a rate of 5°C/min in an air atmosphere and held at that temperature for 2 hours; after being cooled, the mixture 1 was transferred to a delayed coking tower and subjected to a second heating step there, heated to 550°C at a rate of 10°C/min in an argon atmosphere and held at that temperature for 3 hours to obtain a carbon-containing intermediate material.
(d) A given mass of boron powder was weighed and mixed with the carbon-containing intermediate material to obtain a mixture 2, and the mixture 2 was pulverized, where a mass percentage of element boron in the boron powder to the carbon-containing intermediate material was 2%, and Dᵥ50 of the mixture 2 was 10µm.
(e) Graphitization treatment was performed on the mixture 2 to obtain a material 1, where a graphitization treatment temperature was 2500°C and a graphitization treatment time was 5 hours.

The material 1 included a carbon matrix, boron and iron, where the iron was distributed in the interior of the carbon matrix. The boron was distributed in a surface layer of the carbon matrix. The iron was in a zero-valence atomic state. The boron was in a boron carbide state. Given that the carbon matrix was 100 parts by weight, the iron was 0.41 parts by weight, and the boron was 0.21 parts by weight.

Preparation methods of materials 2-41 are similar to that of material 1, except that some process parameters are changed with details given in Table 1. The materials 2-41 all included a carbon matrix, boron and iron, where the iron was distributed in the interior of the carbon matrix. The boron was distributed in a surface layer of the carbon matrix. The iron was in a zero-valence atomic state. The boron was in a boron carbide state. Given that the carbon matrix was 100 parts by weight, the parts by weigh of the iron and the boron were as given Table 1.

### Comparative material 1

(a) A given mass (for example, 100g) of pitch coke was weighed as a carbon-containing raw material whose volatile proportion was 7%.
(b) A given mass of ferrous powder was weighed and mixed with the pitch coke to obtain a mixture, where a mass percentage of element iron in the ferrous powder to the pitch coke was 1%, and the mixture was pulverized, having a Dᵥ50 of 10 µm.
(c) Graphitization treatment was performed on the pulverized mixture to obtain a comparative material 1, where a graphitization treatment temperature was 2800°C and a graphitization treatment time was 5 hours.

The comparative material 1 included a carbon matrix and iron, where the iron was distributed in a surface layer of the carbon matrix.

### Comparative material 2

(a) A given mass (for example, 100g) of pitch coke was weighed as a carbon-containing raw material whose volatile proportion was 7%.
(b) A given mass of boron powder was weighed and mixed with the pitch coke to obtain a mixture, and the mixture was pulverized, where a mass percentage of element boron in the boron powder to the pitch coke was 2%, and Dᵥ50 of the mixture was 10 µm.
(c) Graphitization treatment was performed on the mixture to obtain a comparative material 2, where a graphitization treatment temperature was 2500°C and a graphitization treatment time was 5 hours;

The comparative material 2 included a carbon matrix and boron, where the boron was distributed in a surface layer of the carbon matrix.

### Comparative material 3

(a) A given mass (for example, 100g) of pitch coke was weighed as a carbon-containing raw material whose volatile proportion was 7%.
(b) A given mass of ferrous powder and boron powder was weighed and mixed with the pitch coke to obtain a mixture, and the mixture was pulverized, where a mass percentage of element iron in the ferrous powder to the pitch coke was 1%, a mass percentage of element boron in the boron powder to the pitch coke was 2%, and Dᵥ50 of the mixture was 10 µm.
(c) Graphitization treatment was performed on the mixture to obtain a comparative material 3, where a graphitization treatment temperature was 2500°C and a graphitization treatment time was 5 hours.

The comparative material 3 included a carbon matrix, boron and iron, where the iron and the boron were both distributed in a surface layer of the carbon matrix.

### II. Preparation of secondary battery

### Example 1

### 1. Preparation of positive-electrode plate

Lithium nickel cobalt manganese oxide LiNi_{0.8}Co_{0.1}Mn_{0.1}O₂ (NCM811), a conductive agent carbon black (Super P), and a binder PVDF were fully stirred and mixed in an appropriate amount of N-methylpyrrolidone (NMP) in a mass ratio of 97.5:1.5:1, to form a uniform positive-electrode slurry. The positive-electrode slurry was applied to a surface of an aluminum foil positive-electrode current collector, followed by drying, cold pressing, slitting and cutting, to obtain a positive-electrode plate. The positive-electrode plate had a compacted density of 3.5g/cm³ and an areal density of 17mg/cm².

### 2. Preparation of negative-electrode plate

The material 1 prepared above, a binder styrene-butadiene rubber (SBR), a thickener sodium carboxymethyl cellulose (CMC-Na), and a conductive agent carbon black (Super P) were fully stirred and mixed in an appropriate amount of deionized water in a mass ratio of 96.2:1.8:1.2:0.8, to form a uniform negative-electrode slurry. The negative-electrode slurry was applied on a surface of a copper foil negative-electrode current collector, followed by drying, cold pressing, slitting, and cutting, to obtain a negative-electrode plate. The negative-electrode plate had a compacted density of 1.6g/cm³ and an areal density of 10mg/cm².

### 3. Separator

A 9 µm thick PE film was selected as a separator.

### 4. Preparation of electrolyte

Ethylene carbonate (EC), ethyl methyl carbonate (EMC), and diethyl carbonate (DEC) were mixed at a volume ratio of 1:1:1, and then a fully dried lithium salt LiPF₆ was uniformly dissolved in the solvent mixture to obtain an electrolyte, where a concentration of LiPF₆ was 1 mol/L.

### 5. Preparation of secondary battery

The positive-electrode plate, the separator, and the negative-electrode plate were sequentially stacked, so that the separator was located between the positive-electrode plate and the negative-electrode plate to provide separation. Then, the resulting stack were wound to form an electrode assembly. The electrode assembly was placed in the outer package and the prepared electrolyte was injected into the secondary battery that was dried, followed by processes including vacuum packaging, standing, formation, and shaping, to obtain a secondary battery.

Preparation methods of Examples 2-41 and Comparative Examples 1-3 are similar to that of Example 1 except for the negative-electrode active material used, details of which are given in Table 2.

### III. Battery performance test

### 1. Test of fast charging capability

The secondary batteries of Examples 1-41 and Comparative Examples 1-3 were charged to a charge cut-off voltage of 4.4 V at a constant current of 0.33C at 25°C, then charged to a current of 0.05C at a constant voltage, left standing for 5 minutes, and then discharged to a discharge cut-off voltage of 2.8 V at a constant current of 0.33C. Their actual capacity was recorded as C₀.

Then the batteries were charged to a full-battery charge cut-off voltage of 4.4 V or a negative-electrode cut-off potential of 0 V (whichever came first) at constant currents of 0.5C₀, 1C₀, 1.5C₀, 2C₀, 2.5C₀, 3C₀, 3.5C₀, 4C₀, and 4.5C₀ in turn. After each charge, the batteries were discharged to a full-battery discharge cut-off voltage of 2.8 V at 1C₀. Negative-electrode potentials corresponding to charging to 10%, 20%, 30%, ..., 80% SOCs (State of Charge, state of charge) at different charging rates were recorded. Rate-negative-electrode potential curves under different SOCs were drawn, and linear fitting was performed to obtain charging rates corresponding to a negative-electrode potential of 0 V under different SOCs. These charging rates were charging windows for these SOCs, denoted as C_{10%SOC}, C_{20%SOC}, C_{30%SOC}, C_{40%SOC}, C_{50%SOC}, C_{60%SOC}, C_{70%SOC}, and C_{80%SOC}. A charging time T (min) for each of the batteries charged from 10% SOC to 80% SOC was calculated according to this formula: (60/C_{20%SOC} + 60/C_{30%SOC} + 60/C_{40%SOC} + 60/C_{50%SOC} + 60/C_{60%SOC} + 60/C_{70%SOC} + 60/C_{80%SOC}) × 10%. A shorter time means better fast charging capability of the battery.

### 2. 25°C cycling performance

The secondary batteries of the examples and comparative examples were charged to a charge cut-off voltage of 4.4 V at a constant current of 0.33C at 25°C, then charged to a current of 0.05C at a constant voltage, left standing for 5 minutes, and then discharged to a discharge cut-off voltage of 2.8 V at a constant current of 0.33C. Their initial capacity was recorded as C₀. Then the batteries continued to be charged and discharged at 0.33C, and a discharge capacity Cₙ of each cycle was recorded, until a cycling capacity retention rate (Cₙ/C₀ × 100%) was 80%. The number of cycles at that point was recorded. More cycles mean a longer cycle life of the battery.

The performance characterization results of Examples 1-41 and Comparative Examples 1-3 are given in Table 2.

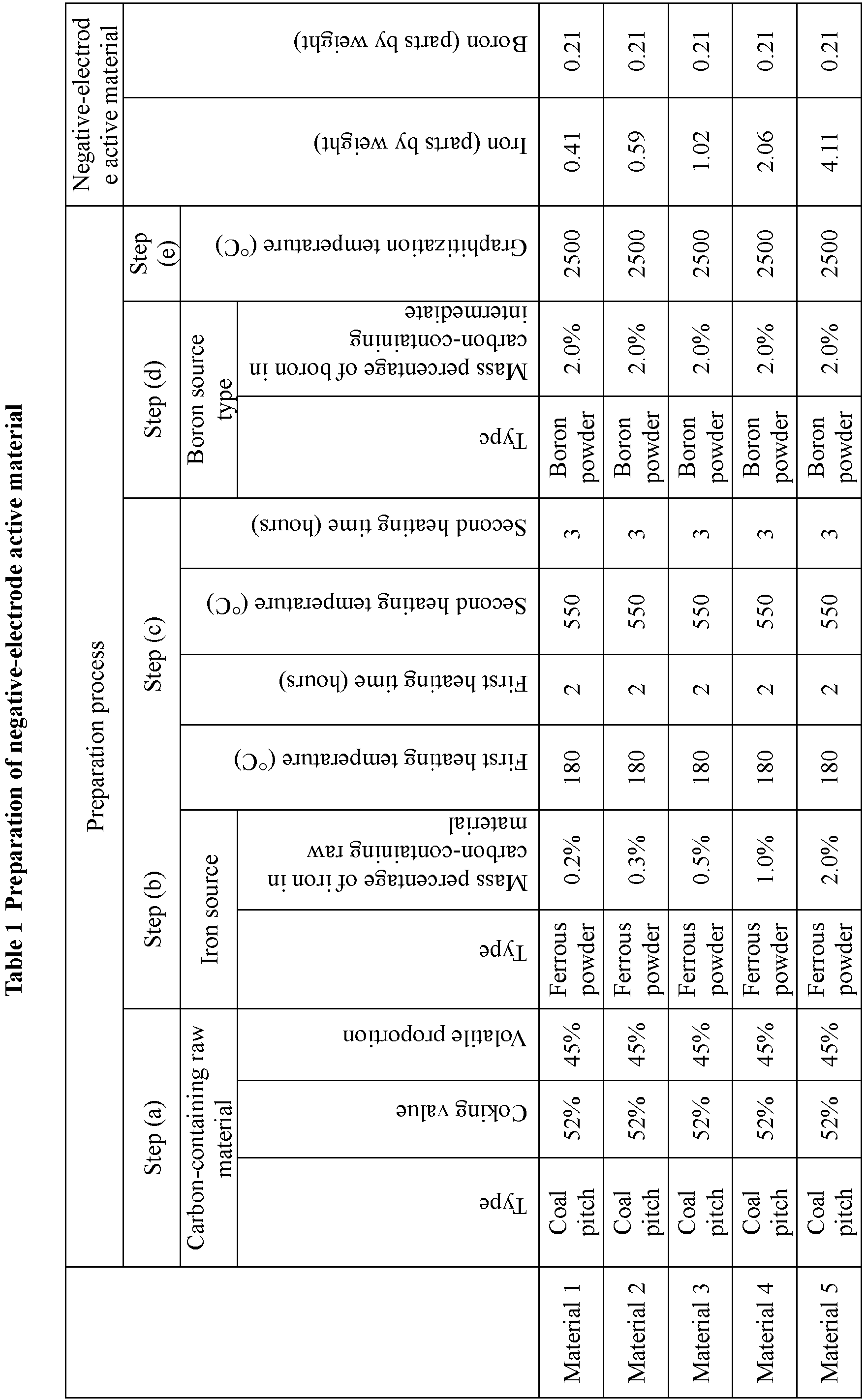

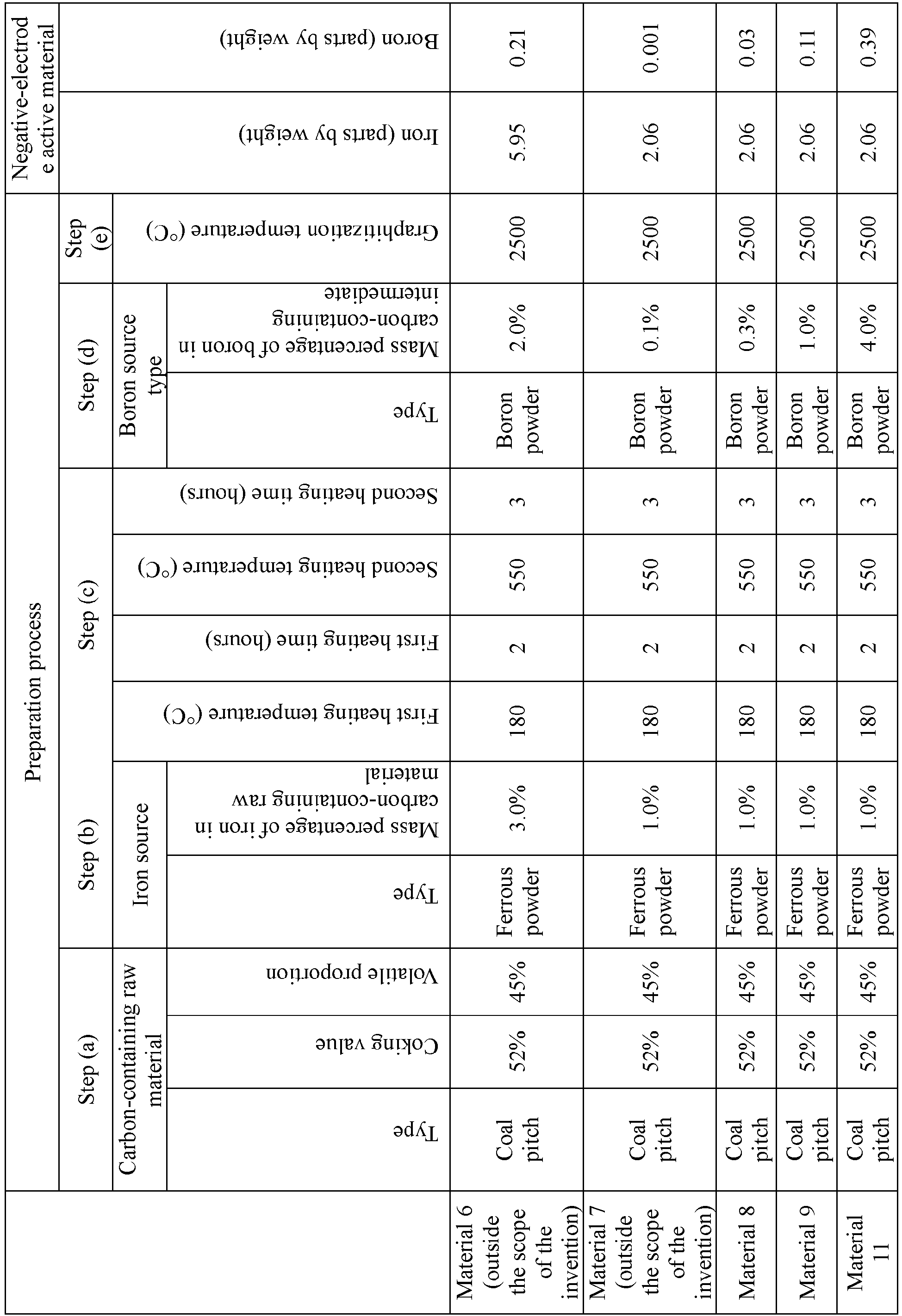

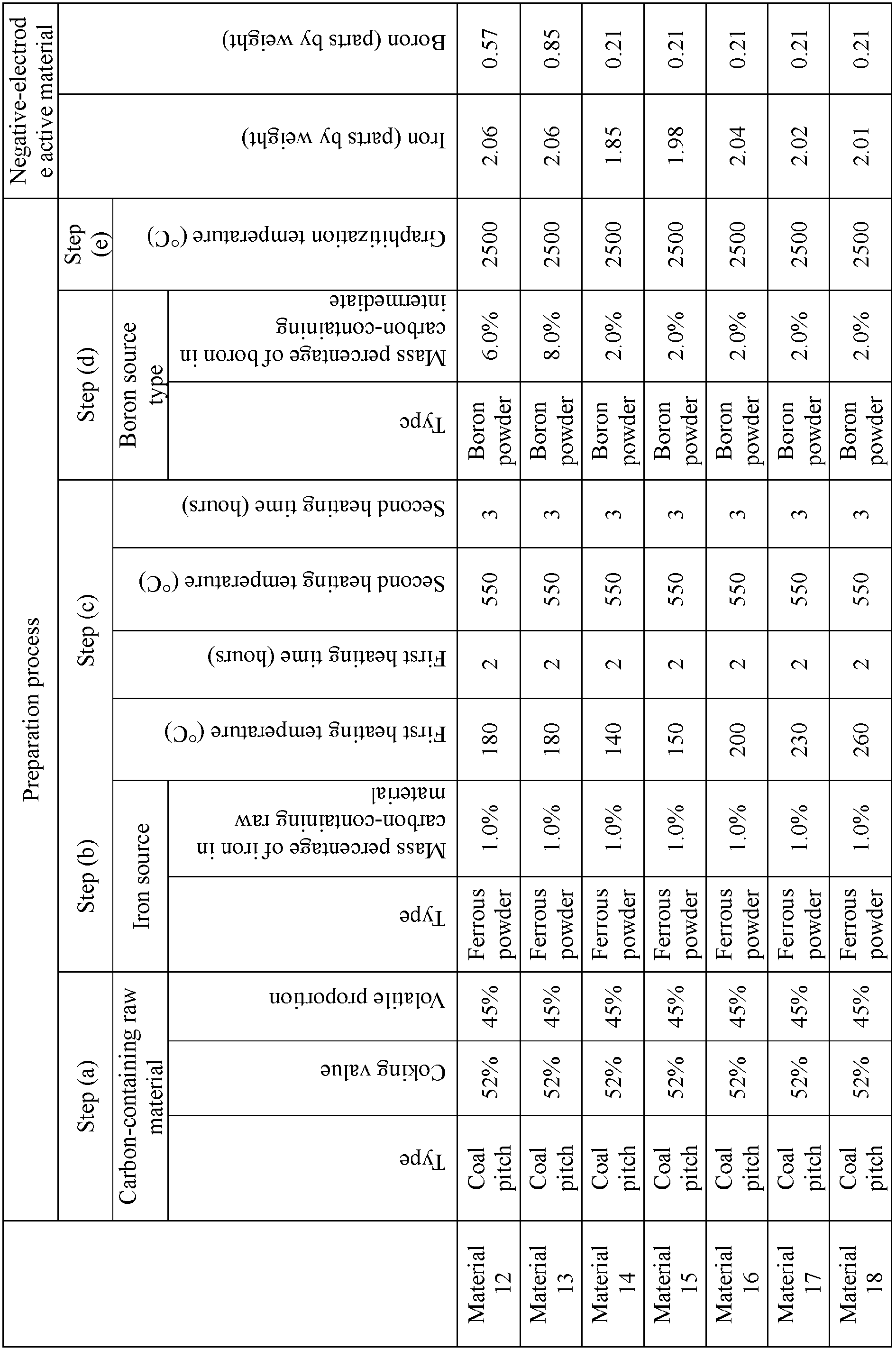

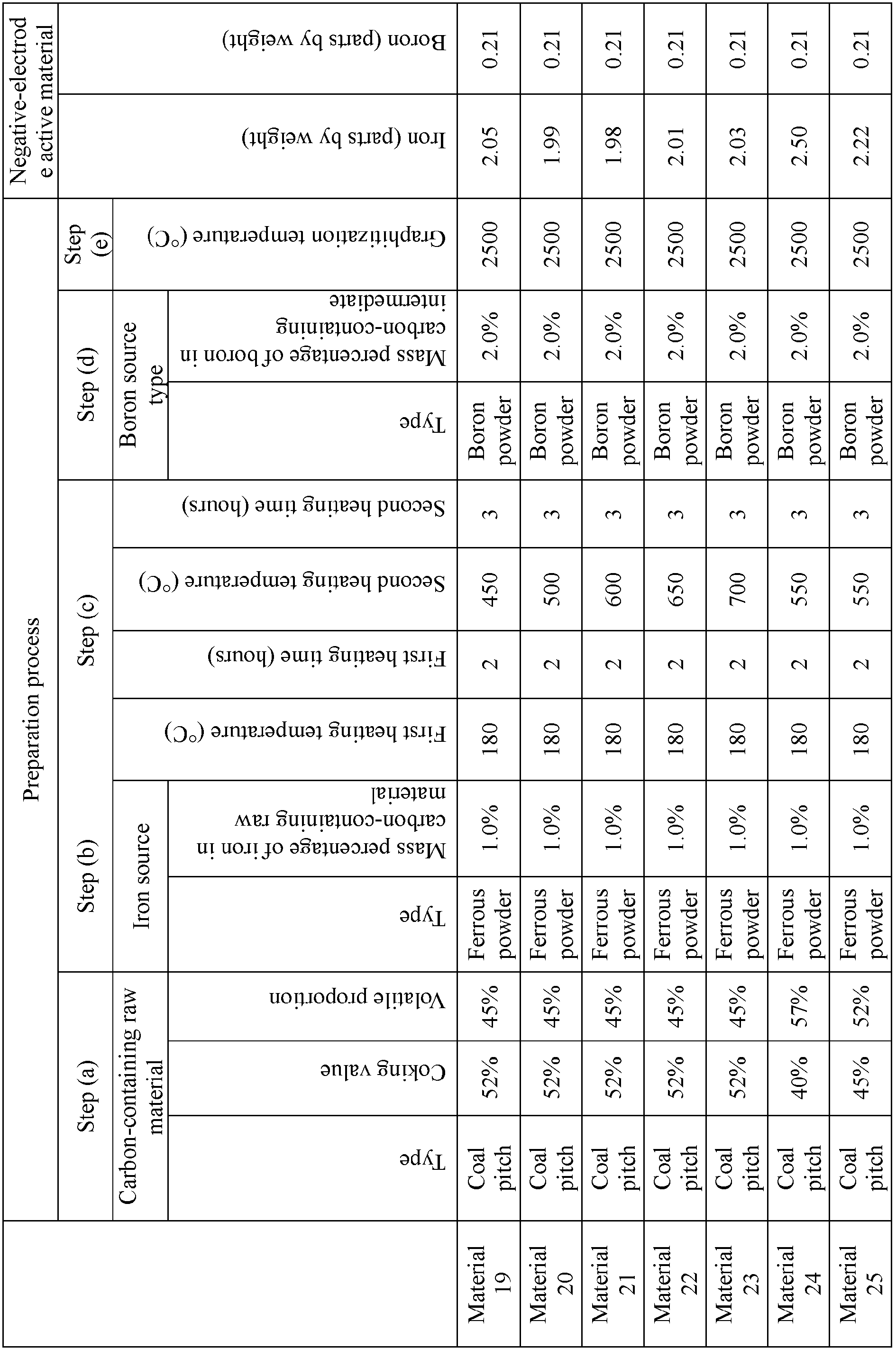

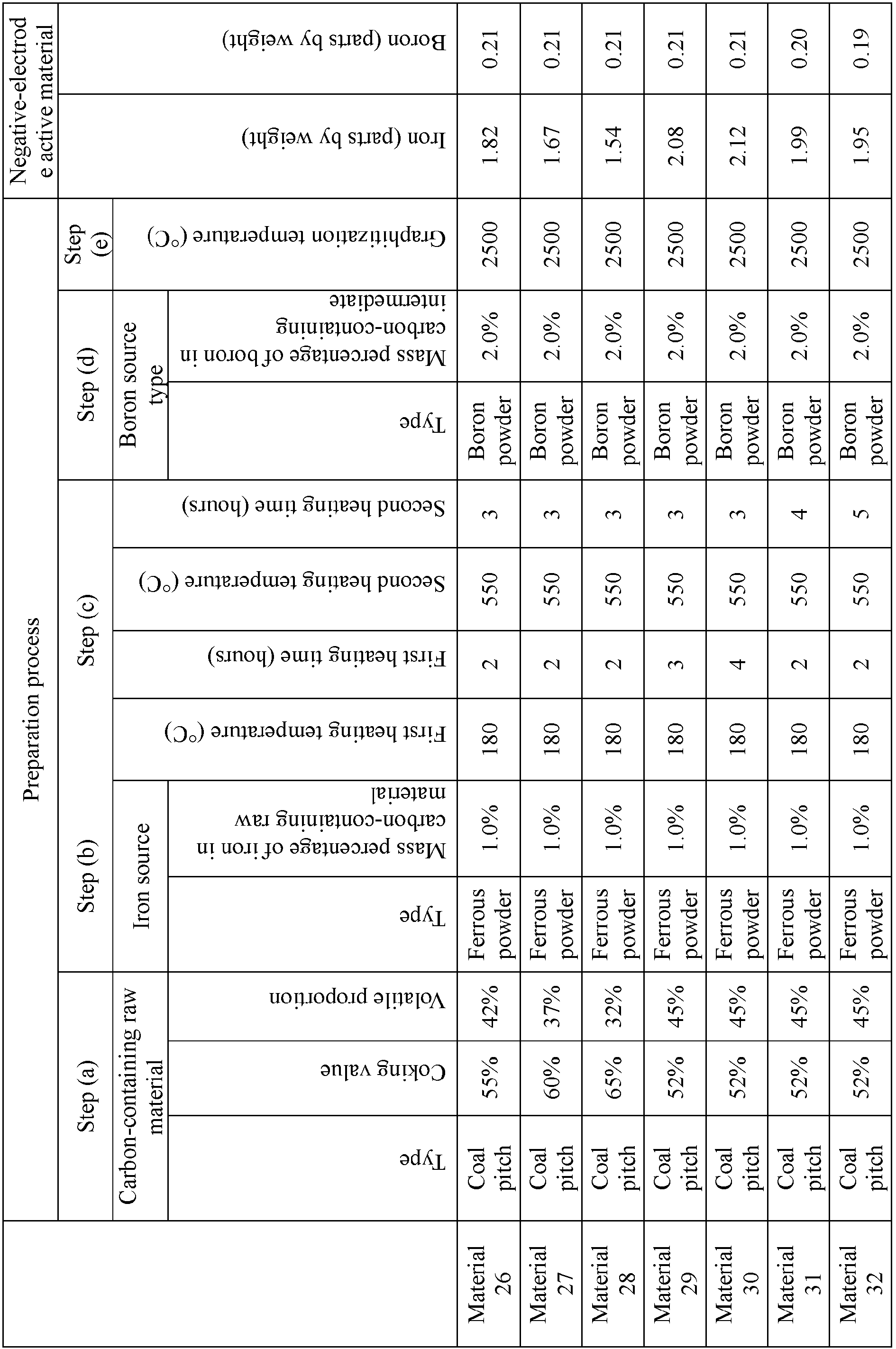

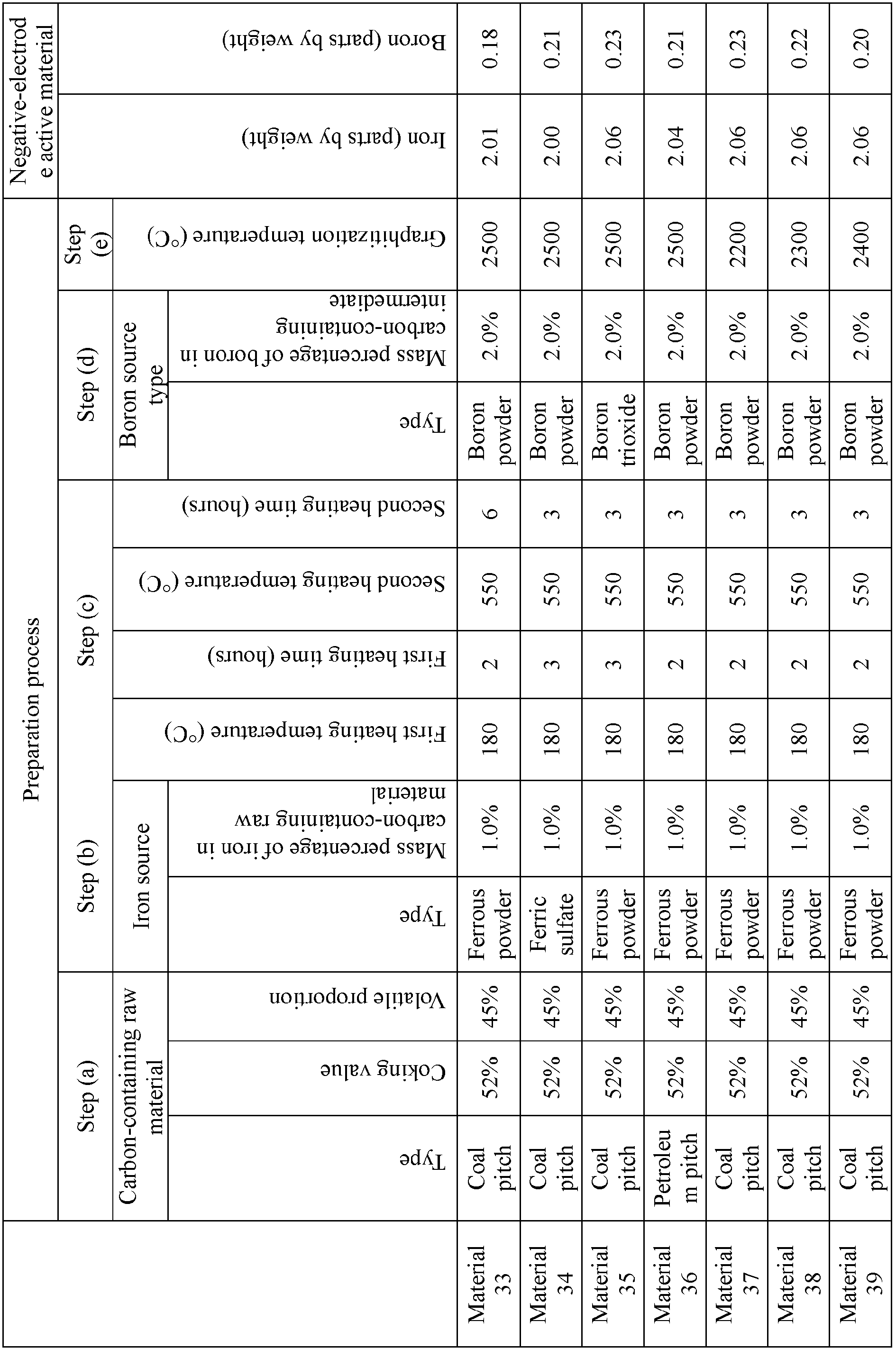

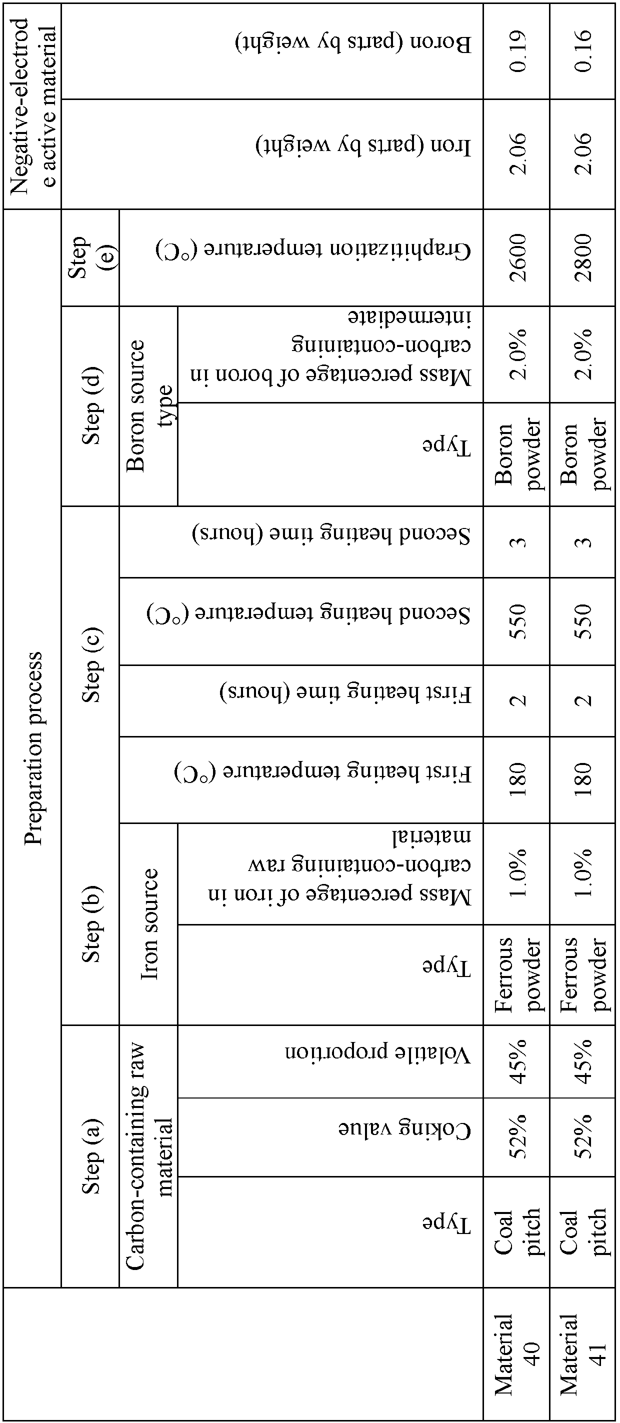

**Table 2 Results of battery performance test**

| Number | Negative-electrode active material | Fast charging capability (min) | Battery cycle life |
|---|---|---|---|
| Example 1 | Material 1 | 27 | 3120 |
| Example 2 | Material 2 | 26 | 3250 |
| Example 3 | Material 3 | 26 | 3340 |
| Example 4 | Material 4 | 25 | 3543 |
| Example 5 | Material 5 | 27 | 3350 |
| Example 6 | Material 6 (outside the scope of the invention) | 32 | 3120 |
| Example 7 | Material 7 (outside the scope of the invention) | 24 | 2560 |
| Example 8 | Material 8 | 24 | 3010 |
| Example 9 | Material 9 | 25 | 3460 |
| Example 11 | Material 11 | 28 | 3890 |
| Example 12 | Material 12 | 34 | 3960 |
| Example 13 | Material 13 | 48 | 4320 |
| Example 14 | Material 14 | 29 | 3160 |
| Example 15 | Material 15 | 27 | 3290 |
| Example 16 | Material 16 | 26 | 3460 |
| Example 17 | Material 17 | 30 | 2980 |
| Example 18 | Material 18 | 32 | 2860 |
| Example 19 | Material 19 | 25 | 3210 |
| Example 20 | Material 20 | 25 | 3360 |
| Example 21 | Material 21 | 26 | 3550 |
| Example 22 | Material 22 | 26 | 3650 |
| Example 23 | Material 23 | 27 | 3680 |
| Example 24 | Material 24 | 32 | 3140 |
| Example 25 | Material 25 | 26 | 3210 |
| Example 26 | Material 26 | 26 | 3550 |
| Example 27 | Material 27 | 26 | 3660 |
| Example 28 | Material 28 | 29 | 3060 |
| Example 29 | Material 29 | 24 | 3550 |
| Example 30 | Material 30 | 23 | 3540 |
| Example 31 | Material 31 | 25 | 3540 |
| Example 32 | Material 32 | 26 | 3465 |
| Example 33 | Material 33 | 26 | 3360 |
| Example 34 | Material 34 | 27 | 3370 |
| Example 35 | Material 35 | 26 | 3540 |
| Example 36 | Material 36 | 25 | 3610 |
| Example 37 | Material 37 | 27 | 3080 |
| Example 38 | Material 38 | 26 | 3240 |
| Example 39 | Material 39 | 25 | 3460 |
| Example 40 | Material 40 | 27 | 3610 |
| Example 41 | Material 41 | 32 | 3030 |
| Comparative example 1 | Comparative material 1 | 55 | 1240 |
| Comparative example 2 | Comparative material 2 | 56 | 2630 |
| Comparative example 3 | Comparative material 3 | 50 | 2250 |

According to the test results in Table 2, batteries in Examples 1-41 all satisfy the following: the negative-electrode active material used for the battery includes a carbon matrix, boron and iron, where the iron is distributed in the interior of the carbon matrix. Compared with Comparative Examples 1-3, these batteries have both good fast charging performance and good cycling performance.

## Claims

1. A negative-electrode active material, comprising a carbon matrix, boron and iron, wherein the iron is distributed in the interior of the carbon matrix, wherein the iron is in a zero-valence atomic state, and/or the boron is in at least one of the following states: a boron carbide state, a zero-valence atomic state and a solid solution of boron in carbon, **characterized in that** the carbon matrix is 100 parts by weight, the iron is 0.10 - 5.00 parts by weight, the boron is 0.01 - 3.00 parts by weight, the iron and the boron together are 0.10 - 5.00 parts by weight.

2. The negative-electrode active material according to claim 1, wherein the iron is 0.50 - 3.00 parts by weight, the boron is 0.10 - 0.40 parts by weight, and wherein the iron and the boron together are 0.50 - 3.00 parts by weight.

3. The negative-electrode active material according to claim 1 or 2, wherein the boron is distributed in a surface layer of the carbon matrix.

4. The negative-electrode active material according to any one of claims 1 to 3, wherein amount of the iron is greater than or equal to that of the boron; wherein a weight ratio of the boron to the iron is 1:2 - 1:25, and wherein the weight ratio of the boron to the iron is 1:10 - 1:20, wherein an X-ray photoelectron spectroscopy (XPS) analysis of the negative-electrode active material shows a characteristic peak only under a binding energy in a range of 183.0eV - 188.0eV.

5. The negative-electrode active material according to any one of claims 1 to 4, wherein, at a discharge rate of 0.33C, a delithiation platform voltage of the negative-electrode active material is 0.18V - 0.22V, wherein the carbon matrix is artificial graphite.

6. The negative-electrode active material according to claim 5, wherein a delithiation platform voltage of the negative-electrode active material is 0.19V-0.20V.

7. A preparation method of the negative-electrode active material according to any one of claims 1 to 6, comprising at least the following:
(a) providing a carbon-containing raw material;
(b) adding an iron source to the carbon-containing raw material to obtain a mixture 1;
(c) performing heat treatment on the mixture 1 to obtain a carbon-containing intermediate material;
(d) adding a boron source to the carbon-containing intermediate material to obtain a mixture 2; and
(e) performing graphitization treatment on the mixture 2 to obtain the negative-electrode active material;
wherein the negative-electrode active material comprises a carbon matrix, boron and iron, wherein the iron is distributed in the interior of the carbon matrix, preferably, wherein a coking value of the carbon-containing raw material is 40%-65%, and optionally, 45%-60%.

8. The method according to claim 7, wherein a volatile proportion of the carbon-containing raw material is 30%-55%, and optionally, 35%-50%, and/or, wherein a median particle size Dᵥ50 of the iron source is less than or equal to 3µm, and optionally, 1µm-2µm, and/or, wherein a mass percentage of element iron in the iron source in the carbon-containing raw material is 0.05%-4%, and optionally, 0.2%-2%.

9. The method according to claims 7 or 8, wherein, in step (c), the heat treatment comprises a first heating step and a second heating step, wherein the first heating step is performed for at least 2 hours at a temperature of 140°C - 260°C, and the second heating step is performed for at least 2 hours at a temperature of 500°C - 650°C, preferably, wherein a heat treatment temperature for the first heating step is 150°C - 230°C, and/or a heat treatment temperature of the second heating step is 520°C - 600°C.

10. The method according to claim 9, wherein a heat treatment time of the first heating step is 2 - 4 hours, and/or a heat treatment time of the second heating step is 3 - 6 hours.

11. The method according to any one of claims 7 to 10, wherein a mass percentage of element boron in the boron source in the carbon-containing intermediate material is 0.1% - 8%, and optionally, 1% - 4%, and/or, wherein, in step (e), a temperature of the graphitization treatment is 2200°C - 2600°C, and optionally, 2400°C - 2600°C, and/or, wherein the carbon-containing raw material is selected from at least one of coal pitch, petroleum pitch, natural pitch, shale tar pitch, petroleum, heavy oil and decanted oil; and/or the iron source is selected from at least one of soluble iron (II) salt, soluble iron (III) salt, ferric oxide, ferroferric oxide, ferrous oxide and ferrous powder; and/or the boron source is selected from at least one of elemental boron, boric acid, metaboric acid, pyroboric acid and boron trioxide.

12. A secondary battery (5), comprising a negative-electrode plate, wherein the negative-electrode plate comprises the negative-electrode active material according to any one of claims 1 to 4 or a negative-electrode active material prepared in the method according to any one of claims 7 to 11.

13. A battery module (4), comprising the secondary battery (5) according to claim 12.

14. A battery pack (1), comprising the battery module (4) according to claim 13.

15. An apparatus, comprising at least one of the secondary battery (5) according to claim 12, the battery module (4) according to claim 13, and the battery pack (1) according to claim 14.

## Patentansprüche

1. Aktives Material für negative Elektroden, umfassend eine Kohlenstoffmatrix, Bor und Eisen, wobei das Eisen im Inneren der Kohlenstoffmatrix verteilt ist, wobei das Eisen in einem atomaren Zustand der Nullvalenz vorliegt und/oder das Bor in mindestens einem der folgenden Zustände vorliegt: einem Borcarbid-Zustand, einem atomaren Nullvalenz-Zustand und einer festen Lösung von Bor in Kohlenstoff, **dadurch gekennzeichnet, dass** die Kohlenstoffmatrix 100 Gewichtsteile, das Eisen 0,10 - 5,00 Gewichtsteile, das Bor 0,01 - 3,00 Gewichtsteile, das Eisen und das Bor zusammen 0,10 - 5,00 Gewichtsteile sind.

2. Aktives Material für negative Elektroden nach Anspruch 1, wobei das Eisen 0,50 - 3,00 Gewichtsteile, das Bor 0,10 - 0,40 Gewichtsteile und das Eisen und das Bor zusammen 0,50 - 3,00 Gewichtsteile sind.

3. Aktives Material für negative Elektroden nach Anspruch 1 oder 2, wobei das Bor in einer Oberflächenschicht der Kohlenstoffmatrix verteilt ist.

4. Aktives Material für negative Elektroden nach einem der Ansprüche 1 bis 3, wobei die Menge des Eisens größer oder gleich der des Bors ist; wobei ein Gewichtsverhältnis vom Bor zum Eisen 1:2 - 1:25 beträgt und wobei das Gewichtsverhältnis vom Bor zum Eisen 1:10 - 1:20 beträgt, wobei eine Röntgenphotoelektronenspektroskopie- (XPS) Analyse des aktiven Materials für negative Elektroden einen charakteristischen Peak nur unter einer Bindungsenergie in einem Bereich von 183,0 eV - 188,0 eV zeigt.

5. Aktives Material für negative Elektroden nach einem der Ansprüche 1 bis 4, wobei bei einer Entladungsrate von 0,33 C eine Delithierungsplattformspannung des aktiven Materials für negative Elektroden 0,18 V - 0,22 V beträgt, wobei die Kohlenstoffmatrix künstlicher Graphit ist.

6. Aktives Material für negative Elektroden nach Anspruch 5, wobei eine Delithierungsplattformspannung des aktiven Materials für negative Elektroden 0,19 V - 0,20 V beträgt.

7. Herstellungsverfahren des aktiven Materials für negative Elektroden nach einem der Ansprüche 1 bis 6, umfassend mindestens das Folgende:
(a) Bereitstellen eines kohlenstoffhaltigen Rohmaterials;
(b) Zugeben einer Eisenquelle zu dem kohlenstoffhaltigen Rohmaterial, um ein Gemisch 1 zu erhalten;
(c) Durchführen einer Wärmebehandlung an dem Gemisch 1, um ein kohlenstoffhaltiges Zwischenmaterial zu erhalten;
(d) Zugeben einer Borquelle zu dem kohlenstoffhaltigen Zwischenmaterial, um ein Gemisch 2 zu erhalten; und
(e) Durchführen einer Graphitierungsbehandlung an dem Gemisch 2, um das aktive Material für negative Elektroden zu erhalten;
wobei das aktive Material für negative Elektroden eine Kohlenstoffmatrix, Bor und Eisen umfasst,
wobei das Eisen im Inneren der Kohlenstoffmatrix verteilt ist, wobei vorzugsweise ein Verkokungswert des kohlenstoffhaltigen Rohmaterials 40 % - 65 % und optional 45 % - 60 % beträgt.

8. Verfahren nach Anspruch 7, wobei ein flüchtiger Anteil des kohlenstoffhaltigen Rohmaterials 30 % - 55 % und optional 35 % - 50 % beträgt, und/oder wobei eine mittlere Teilchengröße Dᵥ50 der Eisenquelle weniger als oder gleich 3 µm und optional 1 µm - 2µm beträgt, und/oder wobei ein Massenprozentsatz des Elements Eisen in der Eisenquelle in dem kohlenstoffhaltigen Rohmaterial 0,05 % - 4 % und optional 0,2 % - 2 % beträgt.

9. Verfahren nach Anspruch 7 oder 8, wobei in Schritt (c) die Wärmebehandlung einen ersten Erwärmungsschritt und einen zweiten Erwärmungsschritt umfasst, wobei der erste Erwärmungsschritt mindestens 2 Stunden lang bei einer Temperatur von 140 °C - 260 °C durchgeführt wird und der zweite Erwärmungsschritt mindestens 2 Stunden lang bei einer Temperatur von 500 °C - 650 °C durchgeführt wird, wobei vorzugsweise eine Wärmebehandlungstemperatur für den ersten Erwärmungsschritt 150 °C - 230 °C beträgt und/oder eine Wärmebehandlungstemperatur des zweiten Erwärmungsschrittes 520 °C - 600 °C beträgt.

10. Verfahren nach Anspruch 9, wobei eine Wärmebehandlungszeit des ersten Erwärmungsschrittes 2 - 4 Stunden und/oder eine Wärmebehandlungszeit des zweiten Erwärmungsschrittes 3 - 6 Stunden beträgt.

11. Verfahren nach einem der Ansprüche 7 bis 10, wobei ein Massenprozentsatz des Elements Bor in der Borquelle in dem kohlenstoffhaltigen Zwischenmaterial 0,1 % - 8 % und optional 1 % - 4 % beträgt, und/oder wobei in Schritt (e) die Temperatur der Graphitierungsbehandlung 2200 °C - 2600 °C und optional 2400 °C - 2600 °C beträgt, und/oder wobei das kohlenstoffhaltige Rohmaterial aus mindestens einem von Kohlepech, Erdölpech, Naturpech, Schieferteerpech, Erdöl, Schweröl und dekantiertem Öl ausgewählt ist; und/oder die Eisenquelle aus mindestens einem von löslichem Eisen-(II)-Salz, löslichem Eisen-(III)-Salz, Eisen-(III)-Oxid, Eisen-(II,III)-Oxid, Eisen-(II)-Oxid und Eisen-(II)-Pulver ausgewählt ist; und/oder die Borquelle aus mindestens einem von elementarem Bor, Borsäure, Metaborsäure, Pyroborsäure und Bortrioxid ausgewählt ist.

12. Sekundärbatterie (5), umfassend eine Platte für negative Elektroden, wobei die Platte für negative Elektroden das aktive Material für negative Elektroden nach einem der Ansprüche 1 bis 4 oder ein aktives Material für negative Elektroden umfasst, das nach dem Verfahren nach einem der Ansprüche 7 bis 11 hergestellt wird.

13. Batteriemodul (4), umfassend die Sekundärbatterie (5) nach Anspruch 12.

14. Batteriepack (1), umfassend das Batteriemodul (4) nach Anspruch 13.

15. Einrichtung, umfassend mindestens eines von der Sekundärbatterie (5) nach Anspruch 12, dem Batteriemodul (4) nach Anspruch 13 und dem Batteriepack (1) nach Anspruch 14.

## Revendications

1. Matériau actif d'électrode négative, comprenant une matrice de carbone, du bore et du fer, dans lequel le fer est distribué à l'intérieur de la matrice de carbone, le fer étant dans un état atomique de valence nulle, et/ou le bore étant dans au moins l'un des états suivants : un état carbure de bore, un état atomique de valence nulle et une solution solide de bore dans du carbone, **caractérisé en ce que** la matrice de carbone représente 100 parties en poids, le fer représente de 0,10 à 5,00 parties en poids, le bore représente de 0,01 à 3,00 parties en poids, le fer et le bore ensemble représentent de 0,10 à 5,00 parties en poids.

2. Matériau actif d'électrode négative selon la revendication 1, dans lequel le fer représente de 0,50 à 3,00 parties en poids, le bore représente de 0,10 à 0,40 parties en poids, et dans lequel le fer et le bore ensemble représentent de 0,50 à 3,00 parties en poids.

3. Matériau actif d'électrode négative selon la revendication 1 ou 2, dans lequel le bore est distribué dans une couche de surface de la matrice de carbone.

4. Matériau actif d'électrode négative selon l'une quelconque des revendications 1 à 3, dans lequel la quantité de fer représente plus ou autant que celle du bore ; dans lequel un rapport pondéral du bore au fer est de 1:2 à 1:25, et dans lequel le rapport pondéral du bore au fer est de 1:10 à 1:20, dans lequel une analyse par spectrométrie photoélectronique X (XPS) du matériau actif d'électrode négative présente un pic caractéristique uniquement sous une énergie de liaison dans une plage de 183,0 eV à 188,0 eV.

5. Matériau actif d'électrode négative selon l'une quelconque des revendications 1 à 4, dans lequel, à un taux de décharge de 0,33C, une tension de plateau de délithiation du matériau actif d'électrode négative est de 0,18 V à 0,22 V, la matrice de carbone étant du graphite artificiel.

6. Matériau actif d'électrode négative selon la revendication 5, dans lequel une tension de plateau de délithiation du matériau actif d'électrode négative est de 0,19 V à 0,20 V.

7. Procédé de préparation du matériau actif d'électrode négative selon l'une quelconque des revendications 1 à 6, comprenant au moins les étapes suivantes consistant à :
(a) fournir un matériau brut contenant du carbone ;
(b) ajouter une source de fer au matériau brut contenant du carbone pour obtenir un mélange 1 ;
(c) réaliser un traitement thermique sur le mélange 1 pour obtenir un matériau intermédiaire contenant du carbone ;
(d) ajouter une source de bore au matériau intermédiaire contenant du carbone pour obtenir un mélange 2 ; et
(e) réaliser un traitement de graphitisation sur le mélange 2 pour obtenir le matériau actif d'électrode négative ;
dans lequel le matériau actif d'électrode négative comprend une matrice de carbone, du bore et du fer, dans lequel le fer est distribué à l'intérieur de la matrice de carbone, de préférence, dans lequel un taux de cokéfaction du matériau brut contenant du carbone est de 40 % à 65 %, et éventuellement, de 45 % à 60 %.

8. Procédé selon la revendication 7, dans lequel une proportion volatile du matériau brut contenant du carbone est de 30 % à 55 %, et éventuellement, de 35 % à 50 %, et/ou, dans lequel une taille de particules médiane Dᵥ50 de la source de fer est inférieure ou égale à 3 µm, et éventuellement, de 1 µm à 2 µm, et/ou, dans lequel un pourcentage massique de l'élément fer dans la source de fer dans le matériau brut contenant du carbone est de 0,05 % à 4 %, et éventuellement, de 0,2 % à 2 %.

9. Procédé selon les revendications 7 ou 8, dans lequel, à l'étape (c), le traitement thermique comprend une première étape de chauffage et une deuxième étape de chauffage, la première étape de chauffage étant réalisée pendant au moins 2 heures à une température de 140 °C à 260 °C, et la deuxième étape de chauffage étant réalisée pendant au moins 2 heures à une température de 500 °C à 650 °C, de préférence, une température de traitement thermique pour la première étape de chauffage étant de 150 °C à 230 °C, et/ou une température de traitement thermique de la deuxième étape de chauffage étant de 520 °C à 600 °C.

10. Procédé selon la revendication 9, dans lequel un temps de traitement thermique de la première étape de chauffage est de 2 à 4 heures, et/ou un temps de traitement thermique de la deuxième étape de chauffage est de 3 à 6 heures.

11. Procédé selon l'une quelconque des revendications 7 à 10, dans lequel un pourcentage massique de l'élément bore dans la source de bore dans le matériau intermédiaire contenant du carbone est de 0,1 % à 8 %, et éventuellement, de 1 % à 4 %, et/ou, dans lequel, à l'étape (e), une température du traitement de graphitisation est de 2200 °C à 2600 °C, et éventuellement, de 2400 °C à 2600 °C, et/ou, dans lequel le matériau brut contenant du carbone est sélectionné parmi au moins l'un d'un brai de houille, d'un brai de pétrole, d'un brai naturel, d'un brai de goudron de schiste, d'un pétrole, d'une huile lourde et d'une huile décantée ; et/ou la source de fer est sélectionnée parmi au moins l'un d'un sel de fer (II) soluble, d'un sel de fer (III) soluble, d'un oxyde ferrique, d'un oxyde ferroferrique, d'un oxyde ferreux et d'une poudre ferreuse ; et/ou la source de bore est sélectionnée parmi au moins l'un du bore élémentaire, de l'acide borique, de l'acide métaborique, de l'acide pyroborique et du trioxyde de bore.

12. Batterie rechargeable (5), comprenant une plaque d'électrode négative, dans laquelle la plaque d'électrode négative comprend le matériau actif d'électrode négative selon l'une quelconque des revendications 1 à 4 ou un matériau actif d'électrode négative préparé par le procédé selon l'une quelconque des revendications 7 à 11.

13. Module de batterie (4) comprenant la batterie rechargeable (5) selon la revendication 12.

14. Bloc-batterie (1), comprenant le module de batterie (4) selon la revendication 13.

15. Appareil comprenant au moins l'un de la batterie rechargeable (5) selon la revendication 12, du module de batterie (4) selon la revendication 13, et du bloc-batterie (1) selon la revendication 14.
